# EUROPÄISCHE PATENTSCHRIFT

(11) **EP 3 057 395 B1**
(45) Veröffentlichungstag und Bekanntmachung des Hinweises auf die Patenterteilung: **18.10.2017**
(21) Anmeldenummer: 15797283.7
(22) Anmeldetag: 12.11.2015
(51) Int. Cl.: A01B 15/02, A01B 23/02

(54) **SCHARSPITZE BZW. WERKZEUGKOMBINATION MIT EINER SCHARSPITZE**
BLADE TIP AND TOOL COMBINATION HAVING A BLADE TIP
POINTE DE SOC OU COMBINAISON D'OUTIL AYANT UNE POINTE DE SOC

(30) Priorität: 13.11.2014 DE 102014116618
(43) Veröffentlichungstag der Anmeldung: 24.08.2016
(73) Patentinhaber: Betek GmbH & Co. KG, 78733 Aichhalden (DE)
(72) Erfinder: SMEETS, Florian, 72270 Baiersbronn (DE); SEIFRIED, Fabian, 78662 Herrenzimmern (DE); HUBER, Ruth, 78713 Schramberg (DE)
(74) Vertreter: Herrmann, Jochen
(86) Internationale Anmeldenummer: PCT/EP2015/076437
(87) Internationale Veröffentlichungsnummer: WO 2016/075237

(56) Entgegenhaltungen:
- WO-A2-2014/139733
- DE-A1-102011 102 053

## Beschreibung

Die Erfindung betrifft eine Scharspitze für eine landwirtschaftliche Bodenbearbeitungsmaschine mit einem Basisteil, das an einem Schneidenträger eine Schneide aufweist, wobei das Basisteil eine Schraubaufnahme zur Befestigung an einem Träger, insbesondere einem Zinken der landwirtschaftlichen Bodenbearbeitungsmaschine, aufweist.

Die Erfindung betrifft weiterhin eine Werkzeugkombination mit einer Scharspitze für eine landwirtschaftliche Bodenbearbeitungsmaschine, wobei die Scharspitze ein Basisteil aufweist, das an einem Schneidenträger eine Schneide aufweist, und einem an der Scharspitze angeschlossenen Leitelement, wobei die Scharspitze eine Schraubaufnahmen zur Befestigung an einem Zinken der landwirtschaftliche Bodenbearbeitungsmaschine aufweist.

Die DE 10 2011 102 053 A1 offenbart eine Werkzeugkombination mit einer Scharspitze und einem Leitblech, die gemeinsam an einem Zinken einer Bodenbearbeitungsmaschine befestigt werden können. Die Scharspitze weist an einem Schneid-ende einen Schneidenträger auf, der mit einem Schneidelement, bestehend aus Hartmetall, bestückt ist. Seitlich des Schneidelementes sind im Winkel Sekundärschneiden auf den Schneidenträger aufgelötet. Der Schneidenträger weist eine Schraubaufnahme auf, die fluchtend zu einer Schraubaufnahme des Leitbleches ausgerichtet werden kann. Das Leitblech ist auf die Scharspitze aufgelegt und überdeckt die an die Schneide und die Sekundärschneiden anschließenden Flächenbereiche. Zur Befestigung der Kombination, bestehend aus Leitblech und Scharspitze, wird eine Befestigungsschraube frontseitig durch die zueinander fluchtenden Schraubaufnahmen von Leitblech und Scharspitze gesteckt und in eine Schraubaufnahme des Zinkens eingeschraubt. Bei rauen Einsatzbedingungen und schwierigen Bodenverhältnissen kann es nun vorkommen, dass sich das Leitblech gegenüber der Scharspitze verbiegt und aufgeschält wird. Dadurch wird dann die Funktionsfähigkeit der Werkzeugkombination zumindest erheblich beeinträchtigt.

Es ist Aufgabe der Erfindung, eine Scharspitze der eingangs erwähnten Art bzw. eine Werkzeugkombination mit einer Scharspitze bereitzustellen, die eine sichere Festlegung des Leitelementes und der Scharspitze an einem Zinken oder dergleichen Träger einer landwirtschaftlichen Bodenbearbeitungsmaschine ermöglicht.

Aus WO 2014 / 139733 A2 ist eine Scharspitze bekannt, die zusammen mit einem Leitblech eine Werkzeugkombination bildet. Die Scharspitze weist rückseitig eine Aufnahme auf, in die ein zugekehrtes Ende des Leitblechs eingesteckt werden kann.

Die die Scharspitze betreffende Aufgabe der Erfindung wird dadurch gelöst, dass das Basisteil eine in Werkzeugvorschubrichtung (V) mittels eines Deckabschnitts überdeckte Aufnahme zur Festlegung eines in die Aufnahme einführbaren Steckansatzes eines Leitelements aufweist und dass die Aufnahme zumindest ein Formschlusselement zur Ausbildung einer Formschlussverbindung mit zumindest einem an dem Steckansatz angebrachten Formschlussgegenelement derart aufweist, dass eine Bewegung des Leitelements aus der Aufnahme blockiert ist. Durch den Deckabschnitt ist das Leitelement im Bereich der Aufnahme vor dem Angriff des von der Scharspitze abgetragenen Bodenmaterials geschützt. Insbesondere kann sich das Leitelement an seinem freien Ende dann nicht mehr gegenüber der Scharspitze verbiegen bzw. verdrehen, sodass eine dauerhafte Funktionalität gewährleistet ist. Durch die Formschlussverbindung ist das Leitelement sicher an der Scharspitze festgelegt. Dabei können bei entsprechender Auslegung des Formschlusselements und des Formschlussgegenelements hohe einwirkende Kräfte abgefangen werden.

Gemäß einer bevorzugten Ausgestaltungsvariante der Erfindung kann es vorgesehen sein, dass die Aufnahme zu einer zur Werkzeugvorschubrichtung (V) gegenüberliegenden Rückseite der Scharspitze hin geöffnet ist, dass die Aufnahme zu einer der Schneide gegenüberliegenden Stirnseite des Basisteils hin durch eine Aufnahmeöffnung geöffnet ist und dass die Aufnahme seitlich der Aufnahmeöffnung durch von dem Deckabschnitt ausgehende Seitenwände eingefasst ist. Damit ist das Leitelement auch seitlich geschützt untergebracht und es kann durch die Aufnahmeöffnung in die Aufnahme eingeführt werden.

Eine sichere Formschlussverbindung bei gleichzeitig einfacher Montage kann dadurch erreicht werden, dass das zumindest eine Formschlusselement an einer den Deckabschnitt zur Aufnahme hin begrenzenden Oberfläche und/oder an einer Seitenwand der Aufnahme angebracht oder angeformt ist. Die Scharspitze kann bei der Montage mit ihrer Aufnahme so über den Steckansatz geschoben werden, dass das Formschlusselement an der Aufnahme in das Formschlussgegenelement an dem Steckansatz eingreift, und dann durch eine Schraubverbindung mit dem Träger verbunden werden.

Entsprechend einer Ausführungsvariante der Erfindung kann es vorgesehen sein, dass das zumindest eine Formschlusselement durch zumindest einen von dem Deckabschnitt oder einer Seitenwand in die Aufnahme ragenden Ansatz und/oder durch zumindest eine in den Deckabschnitt oder eine Seitenwand eingebrachte Ausnehmung gebildet ist. Die Abmessungen des Ansatzes und der Aufnahme sind dabei so toleriert, dass sich der Steckansatz einfach in die Aufnahme einführen lässt. Neben einer Blockierung einer Bewegung des Leitelements aus der Aufnahme heraus verhindert der in die Aufnahme ragende Ansatz auch eine Verwindung des Leitelements gegenüber der Scharspitze.

Eine weitere mögliche Ausführungsform der Erfindung sieht vor, dass das zumindest eine Formschlusselement durch zumindest einen sich in Richtung der Aufnahmeöffnung verjüngenden Bereich der Aufnahme gebildet ist. So kann die Breite und/oder die Höhe der Aufnahme im inneren Bereich größer sein als die Höhe oder die Breite in Richtung der Aufnahmeöffnung. Ein Steckansatz mit einem entsprechend geformten Formschlussgegenelement wird so sicher in der Aufnahme gehalten.

Ist es vorgesehen, dass das zumindest eine Formschlusselement als Zentrieransatz oder als Zentrieraufnahme ausgeführt ist und/oder dass das zumindest eine Formschlusselement als Kugelansatz oder als Kugelaufnahme ausgeführt ist, so wird beim Zusammenfügen der Scharspitze und des Leitelements eine Selbstzentrierung der Bauteile erreicht, so dass beispielsweise Schraubaufnahmen zur Aufnahme von Schrauben zur Befestigung der Scharspitze und des Leitelements an dem Träger zueinander fluchten. Durch die Kugelform lassen sich dabei das Formschlusselement und das Formschlussgegenelement leicht ineinander fügen.

Die Formschlussverbindung ist dazu ausgelegt, Kräfte abzufangen, die das Leitelement in Richtung seiner Längserstreckung und der Längserstreckung der Scharspitze aus der Aufnahme der Scharspitze ziehen. Ist es vorgesehen, dass der Deckabschnitt eine zweite Schraubaufnahme aufweist oder dass der Deckabschnitt eine zweite Schraubaufnahme aufweist und dass die zweite Schraubaufnahme durch das zumindest eine Formschlusselement geführt ist, so können auch quer zur Längserstreckung der Scharspitze und des Leitelements einwirkende Kräfte abgefangen werden. Durch die zweite Schraubaufnahme kann eine Schraubverbindung zwischen der Scharspitze, dem Leitelement und dem Träger hergestellt werden. Ist diese Schraubverbindung durch das zumindest eine Formschlusselement geführt, so werden das Formschlusselement und das Formschlussgegenelement durch die Schraubverbindung unmittelbar zusammengedrückt und in ihrer gegenseitigen Position gehalten, so dass die Formschlussverbindung auch bei hohen Querkräften erhalten bleibt.

Entsprechend einer besonders bevorzugten Ausgestaltungsvariante der Erfindung kann es vorgesehen sein, dass die zweite Schraubaufnahme sacklochartig mit einem endseitigen Durchbruch zur Durchführung einer Befestigungsschraube ausgeführt ist. Durch die sacklochartige Ausführung der Schraubaufnahme kann ein Schraubenkopf der Befestigungsschraube versenkt angeordnet werden. Der Schraubenkopf ist somit vor abrasivem Verschleiß durch vorbeigleitendes Erdreich geschützt.

Zur Montage wird eine Befestigungsschraube durch entsprechende Schraubaufnahmen und Bohrungen der Scharspitze, des Leitelements und des Zinkens geführt und rückseitig mit einer Schraubenmutter gesichert. Dabei ist der Schraubenkopf beispielsweise in der Einsenkung der Stufenbohrung versenkt gehalten. Um die Schraubenmutter einfach montieren zu können kann es vorgesehen sein, dass der Durchbruch der zweiten Schraubaufnahme als Schraubenarretierung zur verdrehsicheren Festlegung der eingeführten Befestigungsschraube ausgeführt ist, insbesondere dass der Durchbruch in einer von einem runden Querschnitt abweichenden Form, insbesondere in einer rechteckigen oder im Wesentlichen rechteckigen Form, ausgeführt ist. Die Befestigungsschraube weist im Anschluss an den Schraubenkopf ein entsprechendes Gegenstück mit einer zu der Schraubenarretierung korrespondierenden Form, beispielsweise eines im Wesentlichen rechteckigen Ansatzes, auf, welches in die Schraubenarretierung eingreift und so ein Drehen der Befestigungsschraube verhindert. Die Schraubenmutter kann so auf die Befestigungsschraube gedreht und angezogen werden, ohne dass die Befestigungsschraube über ein an den Schraubenkopf anzusetzendes Werkzeug gekontert werden muss. Der Schraubenkopf kann weiterhin ohne Werkzeugaufnahme, beispielsweise in Form eines Kreuzschlitzes oder Innensechskantes oder ähnlichem, mit einer glatten Oberfläche ausgeführt werden. Durch die Fixierung der Befestigungsschraube durch die Schraubenarretierung wird auch die Demontage der Scharspitze vereinfacht, da kein Werkzeug in eine Werkzeugaufnahme des Schraubenkopfes eingeführt werden muss. Die Befestigungsschraube kann somit auch bei mit Erdreich zugesetzter Werkzeugaufnahme bzw. zugesetzter Stufenbohrung einfach demontiert werden, indem die Schraubenmutter geöffnet und die Befestigungsschraube aus den Schraubaufnahmen und Bohrungen getrieben wird.

Nach einer besonders bevorzugten Erfindungsausgestaltung kann eine Scharspitze derart sein, dass die Aufnahme seitlich durch zwei quer zur Werkzeugvorschubrichtung (V) zueinander beabstandet angeordnete Blockierstücke als Seitenwände begrenzt ist und/oder dass die beiden Blockierstücke zur Aufnahmeöffnung hin in zwei zueinander beabstandet angeordnete Einführschrägen übergehen. Zwischen den beiden Blockierstücken kann das Leitelement eingefasst werden. Die Blockierstücke bilden dabei Anlageflächen für das Leitelement. Mit den Blockierstücken können somit das Leitelement und die Scharspitze quer zur Werkzeugvorschubrichtung aneinander gehalten werden, sodass eine Reduzierung der erforderlichen Anzahl der Befestigungsmittel, insbesondere Befestigungsschrauben, erreicht wird. Sind die Blockierstücke durch einen Verbindungsabschnitt einteilig miteinander verbunden, kann eine weitere Stabilisierung der Blockierstücke erreicht werden. Hierdurch lassen sich Querkräfte zuverlässig abtragen. Die Einführungsschrägen dienen der einfachen Montage.

Eine sowohl quer wie längs zur Einschubrichtung belastbare Führung des Leitelements in der Aufnahme kann dadurch erreicht werden, dass das Formschlusselement zumindest bereichsweise zwischen den Blockierstücken angeordnet ist und dass die Blockierstücke in einem Bereich zwischen 40mm und 50mm, bevorzugt in einem Bereich zwischen 44mm und 48mm, besonders bevorzugt 46mm, beabstandet sind und/oder dass die Einführschrägen, ausgehend von den Blockierstücken, in einem gegenseitigen Öffnungswinkel in einem Bereich zwischen 50° und 70°, bevorzugt in einem Bereich zwischen 58° und 62°, besonders bevorzugt von 60°, angeordnet sind. Durch den somit erreichten Abstand zwischen den Blockierstücken und dem Formschlusselement kann das Leitelement auch in diesem Bereich in genügend großer Materialstärke ausgeführt werden, um den hohen mechanischen Belastungen während der Bodenbearbeitung standzuhalten. Durch die Öffnungswinkel der Einführschrägen wird erreicht, dass die Scharspitze bei der Montage einfach auf das Leitelement geschoben werden kann. Weiterhin kann der Querschnitt und damit die Materialstärke des Leitelements zur stirnseitigen Öffnung der Aufnahme hin derart vergrößert werden, dass in dem besonders auf Biegung belasteten Bereich an der Öffnung der Aufnahme eine entsprechend hohe mechanische Belastbarkeit des Leitelements erreicht wird.

Eine erfindungsgemäße Scharspitze kann dergestalt sein, dass der Schraubaufnahme und/oder der zweiten Schraubaufnahme in Werkzeugvorschubrichtung (V) vorgelagert jeweils ein Vorsprung zugeordnet ist, der über eine Ableitfläche vorsteht und/oder dass die Schraubaufnahmen und die zweite Schraubaufnahme jeweils eine Einsenkung aufweisen, in die jeweils ein Schraubenkopf einer eingeführten Befestigungsschraube zurückgesetzt zu der Ableitfläche einführbar ist. Der Vorsprung dient als Deflektor für das Bodenmaterial und leitet dieses von einem in der jeweiligen Schraubaufnahme gelagerten Schraubenkopf ab. Durch die Ausführung der Schraubaufnahmen in Form von Stufenbohrungen mit entsprechenden Einsenkungen wird verhindert, dass das Erdreich bei der Bodenbearbeitung direkt an den Schraubenköpfen vorbeigeführt wird. Durch diese Maßnahmen sind die Schraubenköpfe verschleißgeschützt positioniert.

Die die Werkzeugkombination betreffende Aufgabe der Erfindung wird dadurch gelöst, dass das Basisteil eine Aufnahme aufweist, die in Werkzeugvorschubrichtung (V) mittels eines Deckabschnitts überdeckt ist, dass das Leitelement einen Steckansatz aufweist, der in der Aufnahme gehalten ist, und dass im Bereich der Aufnahme zwischen der Scharspitze und dem Leitelement eine Formschlussverbindung wirksam ist, die eine Bewegung des Leitelements aus der Aufnahme blockiert. Das Leitelement ist damit gesichert hinter dem Deckabschnitt mit seinem freien Ende untergebracht. Der in die Aufnahme eingebrachte Steckansatz und die Scharspitze sind durch die Formschlussverbindung belastbar, aber wieder lösbar miteinander verbunden. Die Formschlussverbindung gewährleistet die korrekte Ausrichtung der Scharspitze zu dem Leitelement und somit der Schraubaufnahmen zueinander. Dadurch kann eine Befestigungsschraube einfach durch die Schraubaufnahmen geführt und die Scharspitze zusammen mit dem Leitelement mit dem Zinken verbunden werden.

Entsprechend einer besonders bevorzugten Ausgestaltungsvariante der Erfindung kann es kann es vorgesehen sein, dass die Aufnahme zu einer zur Werkzeugvorschubrichtung (V) gegenüberliegenden Rückseite der Scharspitze hin geöffnet ist, dass die Aufnahme zu einer der Schneide gegenüberliegenden Stirnseite des Basisteils hin durch eine Aufnahmeöffnung geöffnet ist, dass die Aufnahme seitlich der Aufnahmeöffnung durch von dem Deckabschnitt ausgehende Seitenwände eingefasst ist, dass der Steckansatz des Leitelements durch die Aufnahmeöffnung in die Aufnahme eingeführt ist, dass zumindest ein Formschlusselement an einer den Deckabschnitt zur Aufnahme hin begrenzenden Oberfläche und/oder an einer Seitenwand der Aufnahme angebracht oder angeformt ist und dass der Steckansatz zumindest ein zu dem Formschlusselement korrespondierendes Formschlussgegenelement aufweist. Zur Montage kann die Scharspitze mit ihrer Aufnahme über deren rückseitige Öffnung auf den Steckansatz geschoben werden. Dabei greifen das Formschlusselement und das Formschlussgegenelement ineinander und bilden die Formschlussverbindung aus. Das Leitelement ist dabei durch die Aufnahmeöffnung aus der Aufnahme geführt. In dieser Position kann die Scharspitze gegenüber dem Leitelement und dem Träger durch zumindest eine entsprechende Schraubverbindung fixiert werden. Durch die Formschlussverbindung ist eine Bewegung des Leitelements aus der Aufnahmeöffnung heraus blockiert. Die Seitenwände führen zu einer seitlichen Führung des Steckansatzes und damit des Leitelements in der Aufnahme, so dass die Verbindung auch hohen mechanischen Belastungen der Scharspitze und des Leitelements widersteht.

Eine einfach herstellbare, leicht zu montierende und belastbare Formschlussverbindung kann dadurch erreicht werden, dass das zumindest eine Formschlusselement durch zumindest einen von dem Deckabschnitt oder einer Seitenwand in die Aufnahme ragenden Ansatz und/oder durch zumindest eine in den Deckabschnitt oder eine Seitenwand eingebrachte Ausnehmung gebildet ist und dass das zumindest eine Formschlussgegenelement in die Ausnehmung eingreift oder dass der Ansatz in das zumindest eine Formschlussgegenelement eingreift. Der Ansatz und die dazu korrespondierende Ausnehmung können in vielen Formen ausgeführt sein, beispielsweise als zylinderförmige oder rechteckige Zapfen oder als rippenartige Vorsprünge mit den entsprechend geformten Ausnehmungen. Das Formschlusselement und das Formschlussgegenelement sind dabei vorteilhaft einstückig an die Scharspitze oder den Steckansatz angeformt. Die mechanische Belastbarkeit der Formschlussverbindung kann dadurch erhöht werden, dass mehrere Ansätze mit entsprechenden Ausnehmungen vorgesehen sind.

Eine mechanisch besonders belastbare Formschlussverbindung kann dadurch erreicht werden, dass das zumindest eine Formschlusselement durch zumindest einen sich in Richtung der Aufnahmeöffnung verjüngenden Bereich der Aufnahme gebildet ist und dass das zumindest eine Formschlussgegenelement durch zumindest einen sich in Richtung der Aufnahmeöffnung verjüngenden Bereich des Steckansatzes gebildet ist.

Eine exakte Ausrichtung des Leitelements gegenüber der Scharspitze kann dadurch erreicht werden, dass das zumindest eine Formschlusselement als Zentrieransatz und dass zumindest eine Formschlussgegenelement als Zentrieraufnahme ausgeführt ist oder dass das zumindest eine Formschlusselement als Zentrieraufnahme und dass zumindest eine Formschlussgegenelement als Zentrieransatz ausgeführt ist, wobei jeweils der Zentrieransatz in die Zentrieraufnahme eingreift, und/oder dass der Zentrieransatz als Kugelansatz oder die Zentrieraufnahme als Kugelaufnahme ausgeführt ist. Die Kugelform bietet den Vorteil der einfachen Montage, da sich ein Kugelansatz ohne hohen erforderlichen Kraftaufwand selbst in einer entsprechenden Zentrieraufnahme zentriert. Die Zentrieraufnahme kann dabei ebenfalls eine Kugelform, aber auch andere, ggf. einfacher herstellbare Formen, wie beispielsweise eine kreisrunde Bohrung oder eine Kegelform, aufweisen.

Eine besonders einfache Herstellung des Formschlussgegenelements kann dadurch erreicht werden, dass das zumindest eine Formschlussgegenelement als eine in den Steckansatz eingeformte Sicke ausgebildet ist. Das Formschlussgegenelement kann so, beispielsweise mit Hilfe einer Presse, in den Steckansatz eingeformt werden. Aufwändige spanende Bearbeitungsschritte können so vermieden werden.

Eine mechanisch stark belastbare Verbindung zwischen dem Leitelement und dem Zinken sowie eine exakte Positionierung des Leitelements gegenüber dem Zinken der Bodenbearbeitungsmaschine kann dadurch erreicht werden, dass das Leitelement mit dem Zinken verbunden ist und dass in der Grenzfläche zwischen dem Leitelement und dem Zinken eine zusätzliche Formschlussverbindung vorgesehen ist und/oder dass zwischen dem Leitelement und dem Basisteil eine weitere Formschlussverbindung vorgesehen ist.

Eine durchgängige Formschlussverbindung zwischen dem Zinken, dem Leitelement und der Scharspitze kann dadurch erreicht werden, dass das Basisteil der Scharspitze im Bereich der Aufnahme ein Formschlusselement aufweist, welches in ein Formschlussgegenelement an dem Steckansatz des Leitelements und in ein Formschlussgegenelement des Zinkens eingreift und/oder dass der Steckansatz des Leitelements ein Formschlusselement aufweist, welches in ein Formschlussgegenelement des Basisteils der Scharspitze und in ein Formschlussgegenelement des Zinkes eingreift und/oder dass der Zinken ein Formschlusselement aufweist, welches in ein Formschlussgegenelement des Steckansatzes des Leitelements und in das Formschlussgegenelement des Basisteils der Scharspitze eingreift.

Eine hohe mechanische Belastbarkeit des Verbundes aus Scharspitze, Leitelement und Zinken kann dadurch erreicht werden, dass die Scharspitze und das Leitelement quer zur Werkzeugvorschubrichtung (V) mittels eines oder mehrere Blockierstücke formschlüssig gegeneinander blockiert sind und dass die Scharspitze und das Leitelement in und entgegen der Einschubrichtung des Steckansatzes in die Aufnahme mittels des Formschlusselements und des Formschlussgegenelements formschlüssig gegeneinander blockiert sind. Sowohl längs wie quer zur Werkzeugvorschubrichtung (V) angreifende Kräfte können so durch die formschlüssigen Verbindungen abgefangen werden.

Eine mechanisch besonders belastbare Verbindung zwischen der Scharspitze, dem Leitelement und dem Zinken kann dadurch erreicht werden, dass der Deckabschnitt eine zweite Schraubaufnahme aufweist, dass ein Durchbruch der zweiten Schraubaufnahme durch das Formschlusselement geführt ist, dass der Steckansatz eine dritte Schraubaufnahme aufweist und dass ein Durchbruch der dritten Schraubaufnahme durch das Formschlussgegenelement geführt ist. Durch die zweite Schraubaufnahme und die dritte Schraubaufnahme können die Scharspitze und das darunter angeordnete Leitelement mit einem gemeinsamen Befestigungselement mit dem Zinken der Bodenbearbeitungsmaschine verbunden werden. Dabei gewährleisten das Formschlusselement und das Formschlussgegenelement eine korrekte Ausrichtung der Scharspitze zu dem Leitelement sowie die formschlüssige Verbindung zwischen der Scharspitze und dem Leitelement. Durch die Schraubverbindung werden das Formschlusselement und das Formschlussgegenelement fest zusammengepresst, so dass sie auch bei hohen mechanischen Belastungen nicht auseinander gehebelt werden.

Eine sichere Arretierung der Scharspitze gegenüber dem Leitelement kann dadurch erreicht werden, dass das Formschlusselement als Kugelansatz ausgeführt ist und/oder dass das Formschlussgegenelement als Bohrung, insbesondere als Durchgangsbohrung oder als Sackloch, oder als konkav geformte Senkung oder als Senkung mit zu einer Mittellängsachse des Formschlussgegenelements geradlinig und geneigt verlaufenden Flächen ausgeführt ist. Eine Durchgangsbohrung oder ein Sackloch sind dabei einfach herzustellen. Weist die Durchgangsbohrung oder das Sackloch einen gleichen oder geringeren Durchmesser als der Kugelansatz auf, so zentriert sich dieser beim Zusammenschrauben zentrisch zu der Durchgangsbohrung. Durch eine vorzugsweise entsprechend der Rundung des Kugelansatzes konkav geformte Senkung als Formschlussgegenelement wird vorteilhaft eine große Auflagefläche zwischen dem Formschlusselement und dem Formschlussgegenelement erreicht. Dadurch werden abzufangende Kräfte auf eine größere Oberfläche verteilt, wodurch der Druck verringert und damit Verformungen vermieden werden. Auch eine Senkung mit geradlinig geneigt verlaufenden Oberflächen ist einfach zu fertigen. Dabei wird der Kugelansatz durch die geneigt verlaufenden Oberflächen zentrisch ausgerichtet. Die Senkung kann dabei beispielsweise Teil einer Fasbohrung sein.

Um das Leitelement über den Bereich der Aufnahme hinaus mit dem Zinken zu verbinden kann eine weitere Schraubverbindung zwischen dem Leitelement und dem Zinken vorgesehen sein. Um eine dafür verwendete Befestigungsschraube vor verstärktem Verschleiß durch vorbeigleitendes Erdreich zu schützen kann es vorgesehen sein, dass der Deckabschnitt endseitig eine über das Leitelement stehende Freifläche ausbildet und dass eine vierte Schraubaufnahme an dem Leitelement unmittelbar nach der Freifläche, bevorzugt in einem Abstand kleiner 50mm, besonders bevorzugt in einem Abstand kleiner 30mm, angeordnet ist. Das Erdreich wird so über die Schraubaufnahme und die darin gehaltene Befestigungsschraube geleitet oder es wird zumindest der Anpressdruck des vorbeigleitenden Erdreichs auf die Befestigungsschraube verringert, wodurch der Verschleiß des Schraubenkopfes wesentlich verringert werden kann.

Die Erfindung wird im Folgenden anhand eines in den Zeichnungen dargestellten Ausführungsbeispiels näher erläutert. Es zeigen:
- Figur 1: in perspektivischer Frontansicht eine Grubberschar mit einer Scharspitze und einem Leitelement,
- Figur 2: die Darstellung gemäß Figur 1 in einer vergrößerten Seitenansicht,
- Figur 3: die Scharspitze der Grubberschar gemäß Figur 1 in Einzeldarstellung und in Ansicht von vorne,
- Figur 4: die Scharspitze gemäß Figur 3 in Rückansicht,
- Figur 5: in einer seitlichen vergrößerten Schnittdarstellung die an einen Zinken montierte Scharspitze,
- Figur 6: in einer seitlichen weiter vergrößerten Schnittdarstellung die Verbindung zwischen der Scharspitze, einem Leitelement und dem Zinken,
- Figur 7: in einer Schnittdarstellung den Zinken mit der montierten Scharspitze und dem Leitelement aus einer Rückansicht,
- Figur 8: in einer seitlichen vergrößerten Schnittdarstellung die an einen Zinken montierte Scharspitze mit einer verlängerten Aufnahme,
- Fig. 9 - 10: in schematischen seitlichen Schnittdarstellungen weitere Formschlussverbindungen zwischen der Scharspitze und dem Leitelement,
- Fig. 11 - 13: in schematischen rückseitigen Darstellungen weitere Formschlussverbindungen zwischen der Scharspitze und dem Leitelement
- Figur 14: in einer seitlichen vergrößerten Schnittdarstellung die an den Zinken montierte Scharspitze mit einer Formschlussverbindung zwischen dem Leitelement, der Scharspitze und dem Zinken,
- Figur 15: in einer quer zur Werkzeugvorschubrichtung der Scharspitze verlaufenden Schnittdarstellung die in Figur 14 gezeigte Formschlussverbindung,
- Figur 16: in einer seitlichen vergrößerten Schnittdarstellung die an den Zinken montierte Scharspitze mit einer weiteren Formschlussverbindung zwischen dem Leitelement, der Scharspitze und dem Zinken und
- Figur 17: in einer quer zur Werkzeugvorschubrichtung der Scharspitze verlaufenden Schnittdarstellung die in Figur 16 gezeigte weitere Formschlussverbindung.

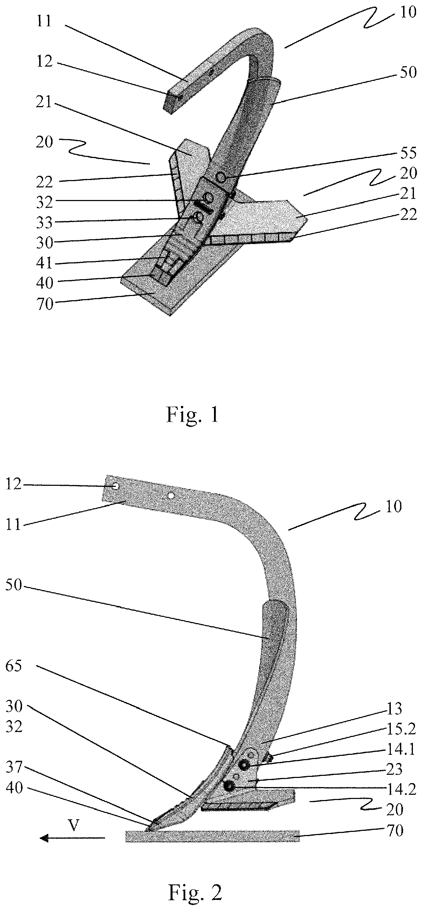

Figur 1 zeigt in perspektivischer Frontansicht eine Grubberschar mit einer Scharspitze 30 und einem Leitelement 50. Die Grubberschar kann an einen Werkzeugträger, insbesondere einen Zinken 10 bzw. Zinkenträger bzw. Grindel oder dergleichen einer landwirtschaftlichen Bodenbearbeitungsmaschine angebaut werden. Dazu weisen die Scharspitze 30 eine Schraubaufnahme 33 und eine zweite Schraubaufnahme 32 und das Leitelement 50 eine vierte Schraubaufnahme 55 auf. Der Zinken 10 weist ein Befestigungsteil 11 auf, das von Befestigungsbohrungen 12 durchsetzt ist. Mittels dieser Befestigungsbohrungen 12 kann der Zinken 10 an einem Geräteträger montiert werden. An dem Zinken 10 sind weiterhin seitlich zu der Scharspitze 30 zwei Scharflügel 20 angebracht. Die Scharflügel 20 besitzen einen Querträger 21, daran sind seitliche Schneidelemente 22, bestehend aus einem Hartwerkstoff, befestigt. Vorzugsweise bestehen die seitlichen Schneidelemente 22 aus einem Hartmetall, das stoffschlüssig mit dem Querträger 21 verbunden, insbesondere verlötet ist. Dem zu bearbeitenden Boden 70 zugewandt endet die Scharspitze 30 in zwei vorderen Schneidelementen 40, denen seitlich zwei Hartstoffelemente 41 zugeordnet sind.

Figur 2 zeigt die Darstellung gemäß Figur 1 in einer vergrößerten Seitenansicht. Der Zinken 10 weist in einem dem Befestigungsteil 11 abgewandten Bereich ein Tragteil 13 auf. An diesem Tragteil 13 sind die Scharspitze 30, das Leitelement 50 sowie die seitlichen Scharflügel 20 angebaut. Von den Querträgern 21 der Scharflügel 20 ist jeweils eine Abwinkelung 23 abgebogen, die mit Schraubaufnahmen ausgerüstet ist. Mittels Montageschrauben 14.1, 14.2, die durch die Schraubaufnahmen der Abwinkelung 23 sowie Schraubaufnahmen des Tragteils 13 hindurchgeführt sind, können die Scharflügel 20 an dem Tragteil 13 des Zinkens 10 befestigt werden. Oberhalb der Scharspitze 30 ist das Leitelement 50 mit einer oberen Befestigungsschraube 15, welche durch die vierte Schraubaufnahme 55 des Leitelements 50 und eine entsprechende Bohrung in dem Zinken 10 geführt ist, und einer zugehörigen oberen Schraubenmutter 15.2 mit dem Tragteil 13 verbaut.
Die Grubberschar wird von der landwirtschaftlichen Bodenbearbeitungsmaschine entsprechend der gezeigten Werkzeugvorschubrichtung V durch den zu bearbeitenden Boden 70 gezogen.

Wie die Figuren 1 und 2 erkennen lassen, ist das Leitelement 50 von einem flächenförmigen bzw. geschmiedeten Stahlbauteil gebildet. Es ist so gebogen, dass sich eine spiralförmige Ableitfläche bildet. Teilweise werden auch geradlinige Ableitflächen eingesetzt. Auf dieser Ableitfläche können nicht dargestellt Hartstoffelemente in Form einer Auftragschweißung aufgebracht sein.

Die vorderen Schneidelemente 40 sind stoffschlüssig, beispielsweise durch Löten, an einem Schneidenträger 37 der Scharspitze 30 angebracht.

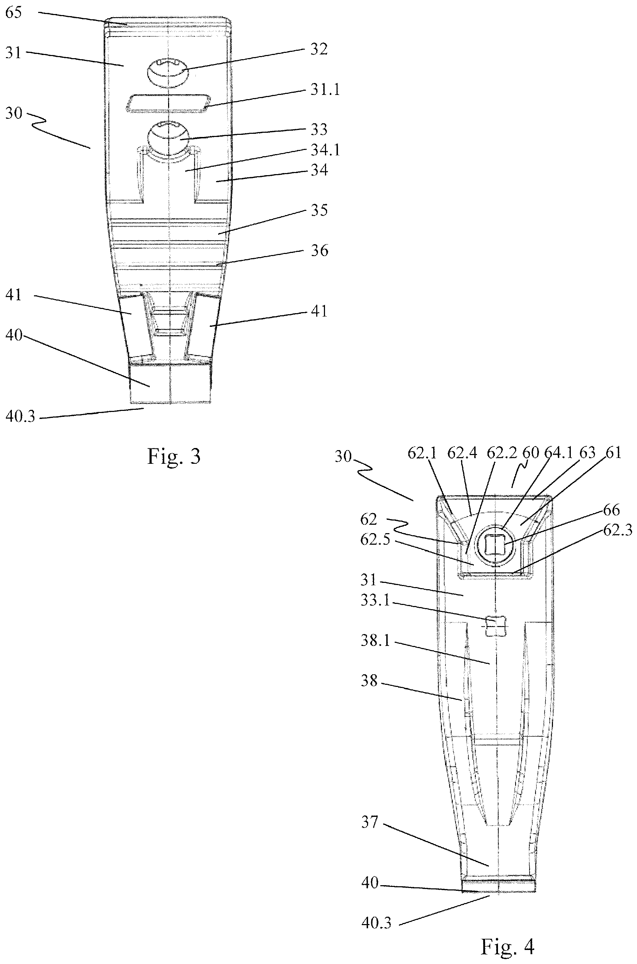

Die Scharspitze 30 steht mit ihrem den vorderen Schneidelementen 40 gegenüberliegenden Ende über dem Leitelement 50 und bildet stirnseitig eine Freifläche 65 aus. Durch diese Freifläche 65 wird vorbeigleitendes Erdreich von der vierten Schraubaufnahme 55 weggeleitet. Damit ist ein in der vierten Schraubaufnahme 55 versenkt gehaltener, in den Figuren 3 und 4 gezeigter oberer Schraubenkopf 15.1 der oberen Befestigungsschraube 15 vor dem abrasiven Verschleiß des Erdreiches geschützt. Um diese Funktion zuverlässig erfüllen zu können, sollte die Höhe der Freifläche 65 mindestens 8 mm betragen. Eine optimale Verschleißschutzwirkung wird bei einem Überstand ≥ 12 mm bewirkt.

Figur 3 zeigt die Scharspitze 30 der Grubberschar gemäß Figur 1 in Einzeldarstellung und in Ansicht von vorne. Wie die Zeichnungen zeigt, besitzt die Scharspitze 30 ein Basisteil 31, das von der Schraubaufnahme 33 durchdrungen ist. Oberhalb der Schraubaufnahme 33 ist ein Bezeichnungsfeld 31.1 angeordnet, dem die zweite Schraubaufnahme 32 folgt. Unterhalb der Schraubaufnahme 33 ist ein Vorsprung 34.1 vorgesehen, der in Form eines Deflektors über eine frontseitige Ableitfläche 34 des Basisteils 31 vorsteht. Auf diese Weise bildet der Vorsprung 34.1 eine Schürze, die einen in der Schraubaufnahme 33 angeordneten Schraubenkopf vor dem abrasiven Angriff vorbeigleitenden Erdreiches schützt. In Werkzeugvorschubrichtung V vor dem Vorsprung 34.1 besitzt das Basisteil 31 Ansätze 35, die über die Ableitfläche 34 vorstehen. Im vorliegenden Ausführungsbeispiel sind die Ansätze 35 rippenförmig ausgebildet und quer zur Werkzeugvorschubrichtung V orientiert. Zwischen den einzelnen Ansätzen 35 sind Vertiefungen 36 gebildet. Während des Werkzeugeinsatzes kann sich Erdreich in den Bereich der Vertiefungen 36 hinein komprimieren und festsetzen. Hierdurch wird eine Art natürlicher Verschleißschutz auf der Ableitfläche 34 gebildet.

In Werkzeugvorschubrichtung V vor den Ansätzen 35 sind die vorderen Schneidelemente 40 in Form von Hartmetallelementen befestigt, welche als vordere Kante der Scharspitze 30 eine Schneide 40.3 ausbilden. In Werkzeugvorschubrichtung V hinter den Schneidelementen 40 sind auf den besonders stark verschleißbelasteten Kantenbereichen des Basisteils 31 die Hartstoffelemente 41 aufgebracht. Vorliegend sind als Hartstoffelemente 41 Hartmetallplatten mit dem Basisteil 31 verlötet. Denkbar ist es jedoch auch, dass eine Panzerschweißung oder dergleichen Verwendung findet.

An der den Schneidelementen 40 gegenüberliegenden Stirnseite endet die Scharspitze 30 in der Freifläche 65.

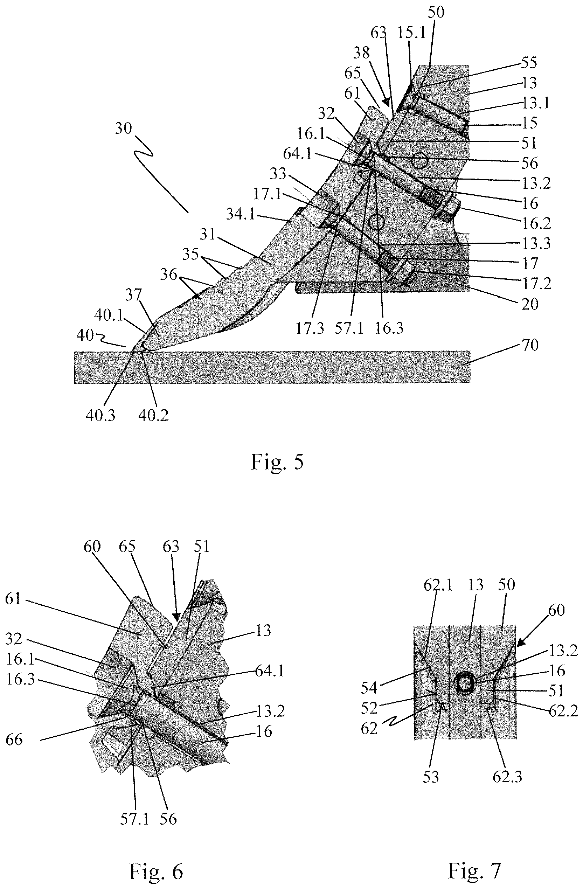

Figur 4 zeigt die Scharspitze 30 gemäß Figur 3 in Rückansicht. Am unteren Ende der Scharspitze 30 steht die Schneide 40.3 der vorderen Schneidelemente 40 über den Schneidenträger 37 als unterem Bereich der Scharspitze 30 über. Im Bereich oberhalb des Schneidenträgers 37 sind an das Basisteil 31 Vorsprünge 38 angeformt. Die Vorsprünge 38 sind rippenartig ausgebildet und im Bereich der Längskanten des Basisteils 31 angeordnet. Die Vorsprünge 38 sind zueinander beabstandet angeordnet, sodass zwischen den Vorsprüngen 38 eine Vertiefung 38.1 entsteht. An dem dem Schneidenträger 37 abgewandten Ende der Vorsprünge 38 ist im Bereich der Vertiefung 38.1 ein als erste Schraubenarretierung 33.1 ausgeführter Durchbruch der Schraubenaufnahme 33 angeordnet. Die erste Schraubenarretierung 33.1 zeigt eine von einem runden Querschnitt abweichende Form, so dass eine eingeführte, in Figur 5 gezeigte untere Befestigungsschraube 17 mit einem angeformten zweiten Arretierungsansatz 17.3 in der ersten Schraubenarretierung 33.1 gegen Verdrehen gesichert werden kann. In der gezeigten Ausführungsvariante besitzt die erste Schraubenarretierung 33.1 eine zumindest annähernd rechteckige Form, wobei die Ecken abgerundet und die Seitenfläche konkav nach innen geformt sind. Der unterhalb eines in Figur 5 gezeigten unteren Schraubenkopfes 17.1 der unteren Befestigungsschraube 17 angeordnete zweite Arretierungsansatz 17.3 zeigt eine dazu korrespondierende Außenkontur, so er mit einem vorgegebenen Spiel in der ersten Schraubenarretierung 33.1 gehalten ist.

Wie Figur 4 weiter zeigt, besitzt die Scharspitze 30 an dem dem Schneidenträger 37 abgewandten Ende eine Aufnahme 60. Die Aufnahme 60 ist taschenförmig in die Rückseite der Scharspitze 30 eingeformt. Sie weist einen Deckabschnitt 61 auf. Seitlich schließen sich an dem Deckabschnitt 61 Einführschrägen 62.1 an. Die Einführschrägen 62.1 sind dabei zueinander V-förmig mit einem Öffnungswinkel 62.4 von im vorliegenden Ausführungsbeispiel 60° angestellt. Im Bereich unterhalb der Einführschrägen 62.1 sind Blockierstücke 62.2 beabstandet angeordnet. Die beiden Blockierstücke 62.2 sind mittels eines Verbindungsstücks 62.3 der Aufnahme 60 miteinander einteilig verbunden. Die Einführungsschrägen 62.1, die Blockierstücke 62.2 und das Verbindungsstück 62.3 bilden Seitenwände 62 der Aufnahme 60, welche von dem Deckabschnitt 61 aufsteigen. Stirnseitig ist die Aufnahme 60 durch eine Aufnahmeöffnung 63 geöffnet. Entlang der Einführschrägen 62.1, der Blockierstücke 62.2 und des Verbindungsstücks 62.3 ist eine Freistellnut 62.5 in dem Deckabschnitt 61 vorgesehen. Die Freistellnut 62.5 bildet einen abgerundeten Übergang von dem Deckabschnitt 61 zu den Seitenwänden 62, wodurch durch äußere Krafteinwirkungen eingebrachte Spannungsspitzen gegenüber einer scharfen Abkantung reduziert werden. Die Freistellnut 62.5 dient ebenfalls der Aufnahme eines Grates, wie er gegebenenfalls fertigungsbedingt an einem in den Figuren 5, 6 und 7 gezeigten Steckansatz 51 des Leitelements 50, der in der Aufnahme 60 gehalten ist, an den Kanten vorliegen kann.

Zwischen den Blockierstücken 62.2 ist ein erstes Formschlusselement 64.1 in der Form eines Kugelansatzes an dem ansonsten als ebene Fläche ausgebildeten Deckabschnitt 61 angeformt. Das erste Formschlusselement 64.1 ragt in die Aufnahme 60. Um einen kompakten Aufbau bei gleichzeitig ausreichender mechanischer Beständigkeit der Verbindung zwischen der Scharspitze 30 und dem Leitelement 50, insbesondere gegenüber auftretenden Kräften entlang der Einschubrichtung des Leitelements 50 in die Aufnahme 60, zu erhalten, liegt der Durchmesser des zumindest einen als Kugelansatz oder als Kugelaufnahme ausgeführten ersten Formschlusselements 64.1 beim Übergang in den Deckabschnitt 61 in einem Bereich zwischen 10mm und 40mm, bevorzugt in einem Bereich zwischen 22mm und 26mm, besonders bevorzugt in einem Bereich zwischen 23,5mm und 24,5mm. In der Mitte des als erstes Formschlusselement 64.1 dienenden Kugelansatzes ist ein Durchbruch der in Figur 3 gezeigten zweiten Schraubaufnahme 32 angeordnet. Der Durchbruch ist dabei in der Form einer Schraubenarretierung 66 ausgeführt. Die Schraubenarretierung 66 dient der Fixierung einer in die zweite Schraubaufnahme 32 eingeführten und in den Figuren 5 und 6 gezeigten Befestigungsschraube 16, welche, wie die bereits beschriebene untere Befestigungsschraube 17, einen Arretierungsansatz 16.3 unterhalb eines Schraubenkopfes 16.1 aufweist, mit dem die Befestigungsschraube 16 in der Schraubenarretierung 66 verdrehsicher festlegt ist.

Figur 5 zeigt in einer seitlichen vergrößerten Schnittdarstellung die im Bereich des Tragteils 13 an den Zinken 10 montierte Scharspitze 30.

Zur Befestigung des Leitelements 50 und der Scharspitze 30 weist das Tragteil 13 des Zinkens eine obere Bohrung 13.1, eine mittlere Bohrung 13.2 und eine untere Bohrung 13.3 auf. Die obere Bohrung 13.1 ist fluchtend zu der in dem Leitelement 30 angebrachten vierten Schraubaufnahme 55 angeordnet, so dass die obere Befestigungsschraube 15 durch die Schraubaufnahme 55 und die Bohrung 13.1 geführt werden kann. Der obere Schraubenkopf 15.1 der oberen Befestigungsschraube 15 ist als Senkkopf ausgeführt und fügt sich in die als gesenkte Bohrung ausgeführte vierte Schraubaufnahme 55 derart ein, dass die Oberfläche des oberen Schraubenkopfes 15.1 bündig oder zurückgesetzt zu der Oberfläche des Leitelements 50 liegt. Der obere Schraubenkopf 15.1 ist somit vor abrasivem Verschleiß durch vorbeigleitendes Erdreich geschützt.

Der Steckansatz 51 des Leitelements 50 ist durch die Aufnahmeöffnung 63 in die Aufnahme 60 der Scharspitze 30 eingeführt und zwischen dem Deckabschnitt 61 und dem Tragteil 13 des Zinkens 10 gehalten. Dabei weist der Steckansatz 51 ein erstes Formschlussgegenelement 57.1 auf, in die das erste Formschlusselement 64.1 der Scharspitze 30 eingreift. Die Befestigungsschraube 16 ist zentrisch durch das erste Formschlusselement 64.1 und das erste Formschlussgegenelement 57.1 sowie durch die dazu fluchtende mittlere Bohrung 13.2 des Tragteils 13 geführt und auf der Rückseite des Tragteils 13 mit einer Schraubenmutter 16.2 gehalten. Sie verbindet so die Scharspitze 30 und das Leitelement 50 mit dem Tragteil 13. Der Schraubenkopf 16.1 der Befestigungsschraube 16 ist in der sacklochartig ausgeführten zweiten Schraubaufnahme 32 versenkt angeordnet. Über die Ableitfläche 34 geführtes Erdreich schabt somit nicht direkt über den Schraubenkopf 16.1, so dass dieser vor abrasivem Verschleiß geschützt ist.

Die untere Bohrung 13.3 des Tragteils 13 ist fluchtend zu der Schraubaufnahme 33 der Scharspitze 30 angeordnet. Die untere Befestigungsschraube 17 ist durch die Schraubaufnahme 33 und die Bohrung 13.3 geführt und an der Rückseite des Tragteils 13 mit einer unteren Schraubenmutter 17.2 verschraubt. Der untere Schraubenkopf 17.1 der unteren Befestigungsschraube 17 ist in der Schraubaufnahme 33 versenkt gehalten, so dass auch er vor abrasivem Verschleiß geschützt ist.

An dem Schneidenträger 37 sind die Schneidelemente 40 in Form von Hartmetallelementen befestigt. Die Schneidelemente 40 weisen einen flächenförmigen Befestigungsabschnitt 40.1 und ein daran angeformtes, entgegen der Werkzeugvorschubrichtung V abstehendes Ansatzstück 40.2 auf. Im Bereich des Ansatzstückes 40.2 wird die Schneide 40.3 gebildet. Die Schneidelemente 40 sind an dem Schneidenträger 37 derart befestigt, dass die freie Endkante des Schneidenträgers 37 von den Ansatzstücken 40.2 der Schneidelemente 40 zumindest teilweise umgriffen wird. Auf diese Weise wird das freie Ende des Schneidenträgers 37 verschleißgeschützt.

Figur 6 zeigt in einer seitlichen weiter vergrößerten Schnittdarstellung die Verbindung zwischen der Scharspitze 30, dem Leitelement 50 und dem Zinken 10 im Bereich der zweiten Schraubaufnahme 32.

Das als Kugelansatz ausgeführte erste Formschlusselement 64.1 greift in das erste Formschlussgegenelement 57.1 des Leitelements 50. Durch die schrägen Flächen des ersten Formschlussgegenelements 57.1 wird der Kugelansatz derart zentriert, dass die zweite Schraubaufnahme 32 und eine in der Mitte des ersten Formschlussgegenelements 57.1 angeordnete dritte Schraubaufnahme 56 fluchtend zueinander ausgerichtet werden.

Die Befestigungsschraube 16 zieht die Scharspitze 30, das Leitelement 15 und das Tragteil 13 des Zinkens 10 zusammen. Dadurch werden die Scharspitze 30 und das Leitelement 15 durch das erste Formschlusselement 64.1 und das erste Formschlussgegenelement 57.1 formschlüssig miteinander verbunden.

Die Befestigungsschraube 16 ist mit ihrem Arretierungsansatz 16.3 in der Schraubenarretierung 66 der zweiten Schraubaufnahme 32 gegen Verdrehen gesichert. Die Schraubenmutter 16.2 kann somit auf die Befestigungsschraube 16 aufgeschraubt und angezogen werden, ohne dass ein Werkzeug in eine entsprechende Werkzeugaufnahme am Schraubenkopf 16.1 angesetzt werden muss. Die Schraubenarretierung 66 ist in dem ersten Formschlusselement 64.1 angeordnet. Durch das in die Aufnahme 60 ragende erste Formschlusselement 64.1 kann die Auflage des Schraubenkopfes 16.1 tiefer in der zweiten Schraubaufnahme 32 vorgesehen werden als bei einem auf Seiten der Aufnahme 60 durchgängig ebenen Deckabschnitt 61. Der Schraubenkopf 16.1 ist somit tiefer in der zweiten Schaubaufnahme 32 versenkt und damit besser vor Abrieb geschützt.

Figur 7 zeigt in einer Schnittdarstellung den Zinken 10 mit der montierten Scharspitze 30 und dem Leitelement 50 aus einer Rückansicht.

Der Steckansatz 51 weist zwei zueinander V-förmig im Winkel eingestellte Führungsflächen 54 auf. Diese gehen in Seitenteile 52 über. Die Seitenteile 52 sind im Bereich eines Endes 53 des Steckansatzes 51 angeordnet.

Zur Montage der Scharspitze 30 wird diese mit ihrer Aufnahme 60 auf den Steckansatz 51 des Leitelementes 50 aufgeschoben. Wie Figur 7 erkennen lässt, kann bei dieser Fügebewegung der Steckansatz 51 des Leitelementes 50 an den Einführschrägen 62.1 eingefädelt werden, sodass eine zielgerichtete Montage möglich ist. Nachdem der Steckansatz 51 die Einführschrägen 62.1 passiert hat, gleitet das Ende 53 des Steckansatzes 51 zwischen die beiden Blockierstücke 62.2. Dabei ist die maßliche Zuordnung so gewählt, dass die Blockierstücke 62.2 seitlich den Seitenteilen 52 zugeordnet sind. Damit kann die Scharspitze 30, unter Berücksichtigung eines konstruktionstechnisch erforderlichen Minimalspiels, formschlüssig quer zur Werkzeugvorschubrichtung V an den Blockierstücken 62.2 festgelegt werden. Für einen definierten Sitz sind dabei dann das Verbindungsstück 62.3 und das Ende 53 des Steckansatzes 51 beabstandet angeordnet. Weiterhin sind auch die Einführschrägen 62.1 im geringen Abstand zu den Führungsschrägen 54 angeordnet. Gleichzeitig greift das erste Formschlusselement 64.1 in das erste Formschlussgegenelement 57.1 ein, wie dies in den Figuren 5 und 6 gezeigt ist.

Nachdem die Scharspitze 30 mit ihrer Aufnahme 60 an dem Steckansatz 51 des Leitelementes 50 festgelegt wurde und das erste Formschlusselement 64.1 in das erste Formschlussgegenelement 57.1 eingreift, sind die Schraubaufnahmen 32, 33 der Scharspitze 30 in Flucht zu der mittleren beziehungsweise unteren Bohrung 13.2, 13.3 des Zinkens 10 angeordnet. Weiterhin ist die zweite Schraubaufnahme 32 in Flucht zur dritten Schraubaufnahme 56 des Leitelements 50 ausgerichtet. Nun können die Befestigungsschrauben 16, 17 durch die zueinander fluchtenden Schraubaufnahmen (32, 33, 56) und Bohrungen (13.2, 13.3) geführt und die Scharspitze 30 an dem Zinken 10 festgelegt werden. Die verdrehsichere Zuordnung der Scharspitze 30 zu dem Zinken 10 wird dabei über die formschlüssige Blockade zwischen dem Steckansatz 51 und der Aufnahme 60 gewährleistet.

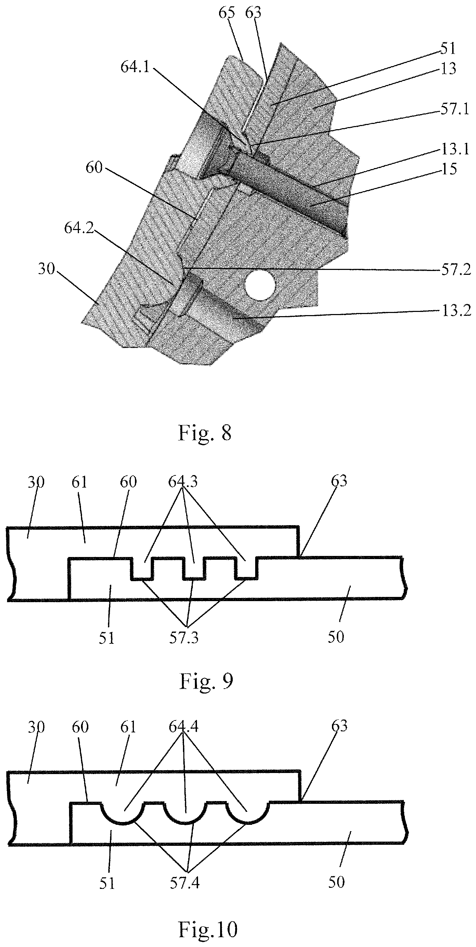

Figur 8 zeigt in einer seitlichen vergrößerten Schnittdarstellung die an den Zinken 10 montierte Scharspitze 30 mit einer verlängerten Aufnahme 60. Der Deckabschnitt 61 und nicht dargestellt die Seitenwände 62 der Aufnahme 60 sind dabei so weit in Richtung des Leitelements 50 verlängert, dass die obere Bohrung 13.1 überdeckt ist.

Das erste Formschlusselement 64.1 und das erste Formschlussgegenelement 57.1 sind jetzt gegenüber der oberen Bohrung 13.1 angeordnet und von der oberen Befestigungsschraube 15 durchdrungen. Die obere Befestigungsschraube 15 ist dazu mit ihrem oberen Schraubenkopf 15.1 in der zweiten Schraubaufnahme 32, welche durch den verlängerten Deckabschnitt 61 gegenüber der oberen Bohrung 13.1 liegt, gehalten. Zwischen dem ersten Formschlusselement 64.1 und dem ersten Formschlussgegenelement 57.1 bildet sich demnach eine Formschlussverbindung aus, wie diese zu Figur 6 beschrieben ist. Die obere Befestigungsschraube 15 ist durch ihre in der zweiten Schraubaufnahme 32 versenkte Position vor abrasivem Verschleiß geschützt.

Zusätzlich ist gegenüber der mittleren Bohrung 13.2 ein zweites Formschlusselement 64.2 an dem Deckabschnitt 61 und ein zweites Formschlussgegenelement 57.2 an dem Steckansatz 51 des Leitelements 50 vorgesehen. Das zweite Formschlusselement 64.2 ist dabei entsprechend dem ersten Formschlusselement 64.1 als Kugelansatz ausgeführt, welcher in das zweite Formschlussgegenelement 57.2 eingreift. Das zweite Formschlussgegenelement 57.2 ist als kreisrunder Durchbruch des Steckansatzes 51 mit schrägen Flächen ausgeführt, so dass sich der Kugelansatz bei der Montage darin zentriert. Auf Grund der so ausgebildeten zweiten Formschlussverbindung kann auf die mittlere Schraubverbindung verzichtet und die Befestigungsschraube 16 mit der zugehörigen Schraubenmutter 16.2 eingespart werden.

In den Figuren 9 und 10 sind in schematischen Schnittdarstellungen weitere mögliche Formschlussverbindungen zwischen der Scharspitze 30 und dem Leitelement 50 gezeigt. Dabei erfolgt die Formschlussverbindung zwischen dem Deckabschnitt 61 und dem Steckansatz 51. Zur vereinfachten Darstellung sind Schraubverbindungen und das Tragteil 13 des Zinkens 10 nicht gezeigt.

In Figur 9 weist der Deckabschnitt 61 drei dritte Formschlusselemente 64.3 in Form von quer zur der Scharspitze 30 verlaufenden, rippenförmigen Ansätzen mit rechteckigem Profil auf. Diese greifen in drei rillenförmige Aufnahmen, welche quer zur Längserstreckung des Steckansatzes 51 ausgerichtet sind und dritte Formschlussgegenelemente 57.3 bilden, ein. Das Leitelement 51 und die Scharspitze 30 sind so über die Formschlussverbindung zwischen den dritten Formschlusselementen 64.3 und den dritten Formschlussgegenelementen 57.3 gegeneinander festgelegt.

In Figur 10 weist der Deckabschnitt 61 drei vierte Formschlusselemente 64.4 in Form von entlang der Mittellängsachse der Scharspitze 30 angeordneten Kugelabschnitten auf. Die vierten Formschlusselemente 64.4 greifen in vierte Formschlussgegenelemente 57.4, welche als konkave Ausnehmungen in der Oberfläche des Steckansatzes 51 eingearbeitet sind, ein.

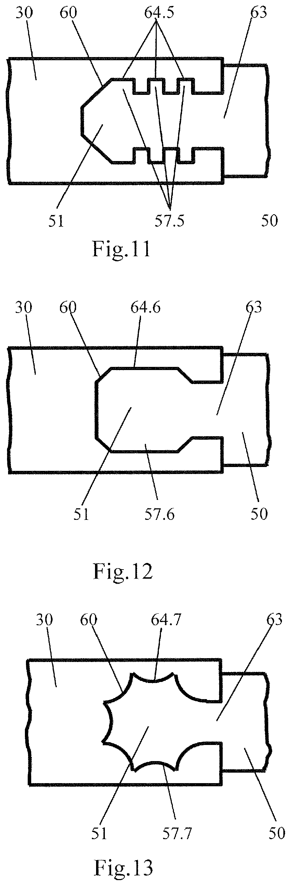

Die Figuren 11 bis 13 zeigen in schematischen rückseitigen Darstellungen weitere Formschlussverbindungen zwischen der Scharspitze 30 und dem Leitelement 50.

In Figur 11 sind fünfte Formschlusselemente 64.5 als Ausnehmungen in die Seitenwände 62 der Aufnahme 60 eingeformt. In diese Ausnehmung greifen entsprechend geformte fünfte Formschlussgegenelemente 57.5 ein. Endseitig weist der Steckansatz 51 einen aufgeweiteten Bereich auf, der entsprechend in einen aufgeweiteten Bereich der Aufnahme 60 eingreift.

In Figur 12 ist die Formschlussverbindung zwischen der Scharspitze 30 und dem Steckansatz 51 des Leitelements 50 durch einen gegenüber der Breite der Aufnahmeöffnung 63 aufgeweiteten Bereich des Steckansatzes 51 und einen entsprechend aufgeweiteten Bereich der Aufnahme 60 gebildet. Der aufgeweitete Bereich der Aufnahme 60 bildet dabei das sechste Formschlusselement 64.7 und der aufgeweitete Bereich des Steckansatzes 51 das sechste Formschlussgegenelement 64.6.

Entsprechend Figur 13 ist ein siebtes Formschlussgegenelement 57.7 als sternförmig gegenüber der Aufnahmeöffnung 63 aufgeweiteter Bereich des Steckansatzes 51 gebildet, welcher in ein entsprechend geformtes siebtes Formschlusselement 64.7 eingelegt ist.

Zur Montage des Leitelements 50 und der Scharspitze 30 wird bei den verschiedenen Varianten der Formschlussverbindungen die Scharspitze 30 mit ihrer Aufnahme 60 auf den Steckansatz 51 des Leitelements 50 geschoben. Dabei ist der Steckansatz 51 durch die Aufnahmeöffnung 63 der Aufnahme 60 geführt und die Formschlusselemente 64.1, 64.2, 64.3, 64.4, 64.5, 64.6, 64.7, 19, 58 und die zugehörigen Formschlussgegenelemente 57.1, 57.2, 57.3, 57.4, 57.5, 57.6, 57.7, 57.8, 18, 39 greifen ineinander. In dieser Position werden die Scharspitze 30 und das Leitelement 50 mit dem Zinken 10 verschraubt. Die Formschlussverbindungen verhindern dabei sicher, dass das Leitelement 50 und die Scharspitze 30 entlang der Richtung ihrer Längserstreckung auseinander gezogen werden können.

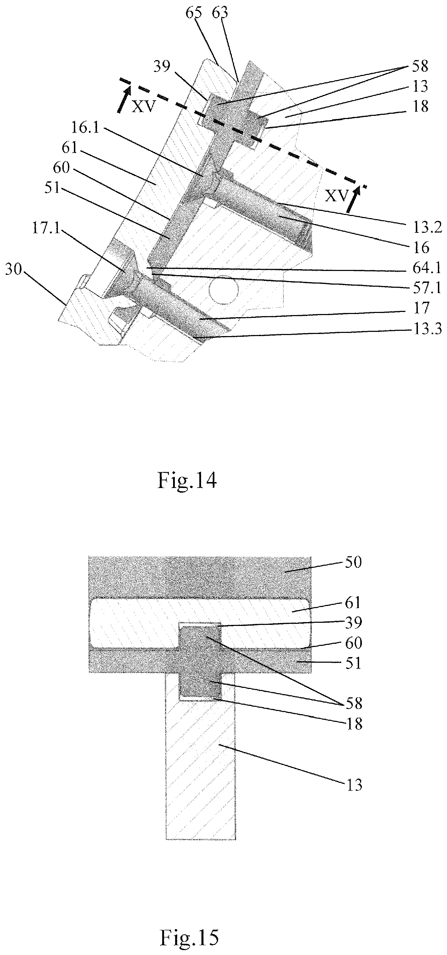

Figur 14 zeigt in einer seitlichen vergrößerten Schnittdarstellung die an den Zinken 10 montierte Scharspitze 30 mit einer Formschlussverbindung zwischen dem Leitelement 50, der Scharspitze 30 und dem Zinken 10.

Eine erste Formschlussverbindung ist zwischen der Aufnahme 60 und dem Steckansatz 51 in Form des als Kugelfläche ausgeführten und bereits zu Figur 5 beschriebenen ersten Formschlusselements 64.1 ausgebildet, welches in das erste Formschlussgegenelement 57.1 in dem Steckansatz 51 eingreift. Das erste Formschlusselement 64.1 wird durch die untere Befestigungsschraube 17 in das erste Formschlussgegenelement 57.1 gepresst. Der Schraubenkopf 16.1 der Befestigungsschraube 16 ist versenkt und abgedeckt von dem Deckabschnitt 61 der Aufnahme 60 in dem Steckansatz 51 des Leitelements 50 gehalten. Zwischen der Befestigungsschraube 16 und der Aufnahmeöffnung 63 der Aufnahme 60 ist an dem Steckansatz 51 ein zehntes Formschlusselement 57.8 in Form eines Zapfens ausgebildet. Der Zapfen weist dabei aus der Ebene des Steckansatzes 51 hinaus sowohl in Richtung zum Deckabschnitt 61 wie auch entgegengesetzt in Richtung zum Tragteil 13 des Zinkens 10. Das zehnte Formschlusselement 57.8 greift dabei sowohl in ein als Ausnehmung in den Deckabschnitt 61 eingeformtes achtes Formschlussgegenelement 39 wie auch in ein als Ausnehmung in das Tragteil 13 eingeformtes neuntes Formschlusselement 18 ein. Somit bildet das achte Formschlusselement 58 eine Formschlussverbindung von dem Leitelement 50 sowohl zur Scharspitze 30 wie auch zum Zinken 10 hin aus.

Figur 15 zeigt in einer quer zur Werkzeugvorschubrichtung V der Scharspitze 30 verlaufenden Schnittdarstellung die in Figur 14 gezeigte Formschlussverbindung entlang der in Figur 14 mit XV gekennzeichneten Schnittlinie.

Der an den Steckansatz 51 beidseitig angeformte Zapfen des achten Formschlusselements 58 greift in die Ausnehmungen des achten Formschlussgegenelements 39 am Deckabschnitt 61 der Aufnahme 60 und des neunten Formschlussgegenelements 19 am Tragteil 13 des Zinkens 10 ein. Es bildet sich somit eine sowohl quer wie längs zur Längserstreckung der Werkzeugkombination wirkende Formschlussverbindung zwischen dem Leitelement 50, dem Zinken 10 und der Scharspitze 30 aus.

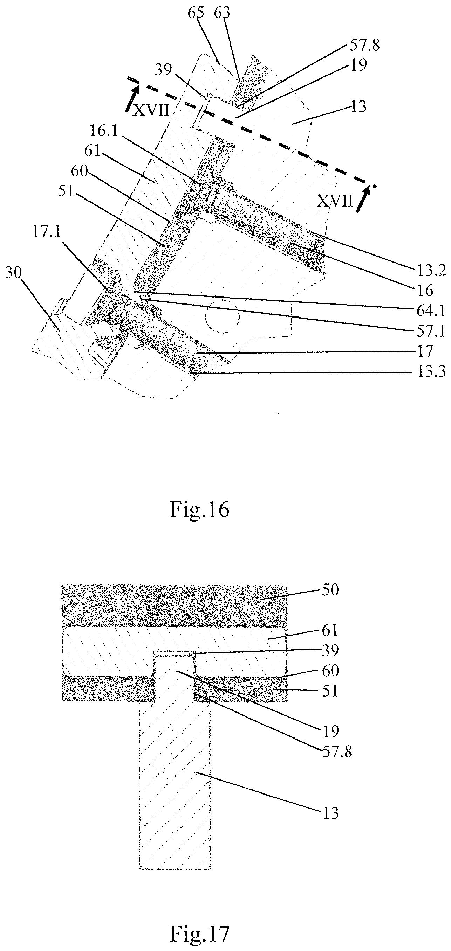

Figur 16 zeigt in einer seitlichen vergrößerten Schnittdarstellung die an den Zinken 10 montierte Scharspitze 30 mit einer weiteren Formschlussverbindung zwischen dem Leitelement 50, der Scharspitze 30 und dem Zinken 10. Die Darstellung entspricht dabei im Wesentlichen der in Figur 14 gezeigten Darstellung. Abweichend hierzu weist das Tragteil 13 des Zinkens 10 ein neuntes Formschlusselement 19 auf, welches als ein in Richtung zum Steckansatz 51 des Leitelements 50 und zum Deckabschnitt 61 der Aufnahme 60 der Scharspitze 30 hin ausgerichteter Zapfen ausgebildet ist. Das neunte Formschlusselement 19 greift dabei in ein als Durchbruch in dem Steckansatz 51 ausgeführtes zehntes Formschlussgegenelement 57.8 und in ein als Eintiefung in dem Deckabschnitt 61 ausgeführtes achtes Formschlussgegenelement 39 ein. Auch hier wird eine Formschlussverbindung zwischen der Scharspitze 30, dem Zinken 10 und dem Leitelement 50 hergestellt.

Figur 17 zeigt in einer quer zur Werkzeugvorschubrichtung V der Scharspitze 30 verlaufenden Schnittdarstellung die in Figur 16 gezeigte weitere Formschlussverbindung entlang der in Figur 16 mit XVII gekennzeichneten Schnittlinie. Das als Zapfen ausgeführte neunte Formschlussgegenelement 19 ist einstückig mit dem Tragteil 13 des Zinkens 10 verbunden. Es ragt in das als Durchbruch ausgeführte zehnte Formschlussgegenelement 57.8 des Steckansatzes 51 und in das als Eintiefung in dem Deckabschnitt 61 der Aufnahme 60 ausgeführte achte Formschlussgegenelement 39.

Durch die in den Figuren 14 bis 17 gezeigten durchgängigen Formschlussverbindungen werden der Zinken 10, das Leitelement 50 und die Scharspitze 30 formschlüssig und damit belastbar miteinander verbunden. Gleichzeitig wird durch die durchgängige Formschlussverbindung erreicht, dass die Bauteile exakt gegeneinander ausgerichtet sind, wodurch die Montage der Werkzeugkombination erleichtert wird.

## Patentansprüche

1. Scharspitze (30) für eine landwirtschaftliche Bodenbearbeitungsmaschine mit einem Basisteil (31), das an einem Schneidenträger (37) eine Schneide (40.3) aufweist, wobei das Basisteil (31) eine Schraubaufnahme (33) zur Befestigung an einem Träger, insbesondere einem Zinken (10) der landwirtschaftlichen Bodenbearbeitungsmaschine, aufweist,
**dadurch gekennzeichnet,**
**dass** das Basisteil (31) eine in Werkzeugvorschubrichtung (V) mittels eines Deckabschnitts (61) überdeckte Aufnahme (60) zur Festlegung eines in die Aufnahme (60) einführbaren Steckansatzes (51) eines Leitelements (50) aufweist und dass die Aufnahme (60) zumindest ein Formschlusselement (64.1, 64.2, 64.3, 64.4, 64.5, 64.6, 64.7, 19, 58) zur Ausbildung einer Formschlussverbindung mit zumindest einem an dem Steckansatz (51) angebrachten Formschlussgegenelement (57.1, 57.2, 57.3, 57.4, 57.5, 57.6, 57.7, 57.8, 18, 39) derart aufweist, dass eine Bewegung des Leitelements (50) aus der Aufnahme (60) blockiert ist.

2. Scharspitze (30) nach Anspruch 1,
**dadurch gekennzeichnet,**
**dass** die Aufnahme (60) zu einer zur Werkzeugvorschubrichtung (V) gegenüberliegenden Rückseite der Scharspitze (30) hin geöffnet ist, dass die Aufnahme (60) zu einer der Schneide (40.3) gegenüberliegenden Stirnseite des Basisteils (31) hin durch eine Aufnahmeöffnung (63) geöffnet ist und dass die Aufnahme (60) seitlich der Aufnahmeöffnung (63) durch von dem Deckabschnitt (61) ausgehende Seitenwände (62) eingefasst ist.

3. Scharspitze (30) nach einem der Ansprüche 1 bis 2,
**dadurch gekennzeichnet,**
**dass** das zumindest eine Formschlusselement (64.1, 64.2, 64.3, 64.4, 64.5, 64.6, 64.7, 19, 58) an einer den Deckabschnitt (61) zur Aufnahme (60) hin begrenzenden Oberfläche und/oder an einer Seitenwand (62) der Aufnahme (60) angebracht oder angeformt ist.

4. Scharspitze (30) nach einem der Ansprüche 1 bis 3,
**dadurch gekennzeichnet,**
**dass** das zumindest eine Formschlusselement (64.1, 64.2, 64.3, 64.4, 64.5, 64.6, 64.7, 19, 58) durch zumindest einen von dem Deckabschnitt (61) oder einer Seitenwand (62) in die Aufnahme (60) ragenden Ansatz und/oder durch zumindest eine in den Deckabschnitt (61) oder eine Seitenwand (60) eingebrachte Ausnehmung gebildet ist.

5. Scharspitze (30) nach einem der Ansprüche 1 bis 4,
**dadurch gekennzeichnet,**
**dass** das zumindest eine Formschlusselement (64.1, 64.2, 64.3, 64.4, 64.5, 64.6, 64.7, 19, 58) durch zumindest einen sich in Richtung der Aufnahmeöffnung (63) verjüngenden Bereich der Aufnahme (60) gebildet ist.

6. Scharspitze (30) nach einem der Ansprüche 1 bis 5,
**dadurch gekennzeichnet,**
**dass** das zumindest eine Formschlusselement (64.1, 64.2, 64.3, 64.4, 64.5, 64.6, 64.7, 19, 58) als Zentrieransatz oder als Zentrieraufnahme ausgeführt ist und/oder dass das zumindest eine Formschlusselement (64.1, 64.2, 64.3, 64.4, 64.5, 64.6, 64.7, 19, 58) als Kugelansatz oder als Kugelaufnahme ausgeführt ist.

7. Scharspitze (30) nach einem der Ansprüche 1 bis 6,
**dadurch gekennzeichnet,**
**dass** der Deckabschnitt (61) eine zweite Schraubaufnahme (32) aufweist oder dass der Deckabschnitt (61) eine zweite Schraubaufnahme (32) aufweist und dass die zweite Schraubaufnahme (32) durch das zumindest eine Formschlusselement (64.1, 64.2, 64.3, 64.4, 64.5, 64.6, 64.7, 19, 58) geführt ist.

8. Scharspitze (30) nach Anspruch 7,
**dadurch gekennzeichnet,**
**dass** die zweite Schraubaufnahme (32) sacklochartig mit einem endseitigen Durchbruch zur Durchführung einer Befestigungsschraube (16) ausgeführt ist.

9. Scharspitze (30) nach Anspruch 7 oder 8,
**dadurch gekennzeichnet,**
**dass** der Durchbruch der zweiten Schraubaufnahme (32) als Schraubenarretierung (66) zur verdrehsicheren Festlegung der eingeführten Befestigungsschraube (16) ausgeführt ist, insbesondere dass der Durchbruch in einer von einem runden Querschnitt abweichenden Form, insbesondere in einer rechteckigen oder im Wesentlichen rechteckigen Form, ausgeführt ist.

10. Scharspitze (30) nach einem der Ansprüche 1 bis 9,
**dadurch gekennzeichnet,**
**dass** die Aufnahme (60) seitlich durch zwei quer zur Werkzeugvorschubrichtung (V) zueinander beabstandet angeordnete Blockierstücke (62.2) als Seitenwände (62) begrenzt ist und/oder dass die beiden Blockierstücke (62.2) zur Aufnahmeöffnung (63) hin in zwei zueinander beabstandet angeordnete Einführschrägen (62.1) übergehen.

11. Scharspitze (30) nach Anspruch 10,
**dadurch gekennzeichnet,**
**dass** das Formschlusselement (64.1, 64.2, 64.3, 64.4, 64.5, 64.6, 64.7, 19, 58) zumindest bereichsweise zwischen den Blockierstücken (62.2) angeordnet ist und dass die Blockierstücke (62.2) in einem Bereich zwischen 40mm und 50mm, bevorzugt in einem Bereich zwischen 44mm und 48mm, besonders bevorzugt 46mm, beabstandet sind und/oder dass die Einführschrägen (62.1), ausgehend von den Blockierstücken (62.2), in einem gegenseitigen Öffnungswinkel (62.4) in einem Bereich zwischen 50° und 70°, bevorzugt in einem Bereich zwischen 58° und 62°, besonders bevorzugt von 60°, angeordnet sind.

12. Scharspitze (30) nach einem der Ansprüche 1 bis 11,
**dadurch gekennzeichnet,**
**dass** der Schraubaufnahme (33) und/oder der zweiten Schraubaufnahme (32) in Werkzeugvorschubrichtung (V) vorgelagert jeweils ein Vorsprung (34.1) zugeordnet ist, der über eine Ableitfläche (34) vorsteht und/oder dass die Schraubaufnahmen (33) und die zweite Schraubaufnahme (32) jeweils eine Einsenkung aufweisen, in die jeweils ein Schraubenkopf (16.1, 17.1) einer eingeführten Befestigungsschraube (16, 17) zurückgesetzt zu der Ableitfläche (34) einführbar ist.

13. Werkzeugkombination mit einer Scharspitze (30) für eine landwirtschaftliche Bodenbearbeitungsmaschine, wobei die Scharspitze (30) ein Basisteil (31) aufweist, das an einem Schneidenträger (37) eine Schneide (40.3) aufweist, und einem an der Scharspitze (30) angeschlossenen Leitelement (50), wobei die Scharspitze (30) eine Schraubaufnahmen (33) zur Befestigung an einem Zinken (10) der landwirtschaftliche Bodenbearbeitungsmaschine aufweist, **dadurch gekennzeichnet,**
**dass** das Basisteil (31) eine Aufnahme (60) aufweist, die in Werkzeugvorschubrichtung (V) mittels eines Deckabschnitts (61) überdeckt ist, dass das Leitelement (50) einen Steckansatz (51) aufweist, der in der Aufnahme (60) gehalten ist, und dass im Bereich der Aufnahme (39) zwischen der Scharspitze (30) und dem Leitelement (50) eine Formschlussverbindung wirksam ist, die eine Bewegung des Leitelements (50) aus der Aufnahme (60) blockiert.

14. Werkzeugkombination nach Anspruch 13,
**dadurch gekennzeichnet,**
**dass** die Aufnahme (60) zu einer zur Werkzeugvorschubrichtung (V) gegenüberliegenden Rückseite der Scharspitze (30) hin geöffnet ist, dass die Aufnahme (60) zu einer der Schneide (40.3) gegenüberliegenden Stirnseite des Basisteils (31) hin durch eine Aufnahmeöffnung (63) geöffnet ist, dass die Aufnahme (60) seitlich der Aufnahmeöffnung (63) durch von dem Deckabschnitt (61) ausgehende Seitenwände (62) eingefasst ist, dass der Steckansatz (51) des Leitelements (50) durch die Aufnahmeöffnung (63) in die Aufnahme (60) eingeführt ist, dass zumindest ein Formschlusselement (64.1, 64.2, 64.3, 64.4, 64.5, 64.6, 64.7, 19, 58) an einer den Deckabschnitt (61) zur Aufnahme (60) hin begrenzenden Oberfläche und/oder an einer Seitenwand (62) der Aufnahme (60) angebracht oder angeformt ist und dass der Steckansatz (51) zumindest ein zu dem Formschlusselement (64.1, 64.2, 64.3, 64.4, 64.5, 64.6, 64.7, 19, 58) korrespondierendes Formschlussgegenelement (57.1, 57.2, 57.3, 57.4, 57.5, 57.6, 57.7, 57.8, 18, 39) aufweist.

15. Werkzeugkombination nach Anspruch 13 oder 14,
**dadurch gekennzeichnet,**
**dass** das zumindest eine Formschlusselement (64.1, 64.2, 64.3, 64.4, 64.5, 64.6, 64.7, 19, 58) durch zumindest einen von dem Deckabschnitt (61) oder einer Seitenwand (62) in die Aufnahme (60) ragenden Ansatz und/oder durch zumindest eine in den Deckabschnitt (61) oder eine Seitenwand (62) eingebrachte Ausnehmung gebildet ist und dass das zumindest eine Formschlussgegenelement in die Ausnehmung eingreift oder dass der Ansatz in das zumindest eine Formschlussgegenelement (57.1, 57.2, 57.3, 57.4, 57.5, 57.6, 57.7, 57.8, 18, 39) eingreift.

16. Werkzeugkombination nach einem der Ansprüche 13 bis 15,
**dadurch gekennzeichnet,**
**dass** das zumindest eine Formschlusselement (64.1, 64.2, 64.3, 64.4, 64.5, 64.6, 64.7, 19, 58) durch zumindest einen sich in Richtung der Aufnahmeöffnung (63) verjüngenden Bereich der Aufnahme (60) gebildet ist und dass das zumindest eine Formschlussgegenelement (57.1, 57.2, 57.3, 57.4, 57.5, 57.6, 57.7, 57.8, 18, 39) durch zumindest einen sich in Richtung der Aufnahmeöffnung (63) verjüngenden Bereich des Steckansatzes (51) gebildet ist.

17. Werkzeugkombination nach einem der Ansprüche 13 bis 16,
**dadurch gekennzeichnet,**
**dass** das zumindest eine Formschlusselement (64.1, 64.2, 64.3, 64.4, 64.5, 64.6, 64.7, 19, 58) als Zentrieransatz und dass zumindest eine Formschlussgegenelement (57.1, 57.2, 57.3, 57.4, 57.5, 57.6, 57.7, 57.8, 18, 39) als Zentrieraufnahme ausgeführt ist oder dass das zumindest eine Formschlusselement (64.1, 64.2, 64.3, 64.4, 64.5, 64.6, 64.7, 19, 58) als Zentrieraufnahme und dass zumindest eine Formschlussgegenelement (57.1, 57.2, 57.3, 57.4, 57.5, 57.6, 57.7, 57.8, 18, 39) als Zentrieransatz ausgeführt ist, wobei jeweils der Zentrieransatz in die Zentrieraufnahme eingreift, und/oder dass der Zentrieransatz als Kugelansatz oder die Zentrieraufnahme Kugelaufnahme als ausgeführt ist.

18. Werkzeugkombination nach einem der Ansprüche 13 bis 17,
**dadurch gekennzeichnet,**
**dass** das zumindest eine Formschlussgegenelement (57.1, 57.2, 57.3, 57.4, 57.5, 57.6, 57.7, 57.8, 18, 39) als eine in den Steckansatz (51) eingeformte Sicke ausgebildet ist.

19. Werkzeugkombination nach einem der Ansprüche 13 bis 18,
**dadurch gekennzeichnet,**
**dass** das Leitelement (50) mit dem Zinken (10) verbunden ist und dass in der Grenzfläche zwischen dem Leitelement (50) und dem Zinken (10) eine zusätzliche Formschlussverbindung vorgesehen ist und/oder dass zwischen dem Leitelement (50) und dem Basisteil (31) eine weitere Formschlussverbindung vorgesehen ist.

20. Werkzeugkombination nach einem der Ansprüche 13 bis 19,
**dadurch gekennzeichnet,**
**dass** das Basisteil (31) der Scharspitze (30) im Bereich der Aufnahme (60) ein Formschlusselement (64.1, 64.2, 64.3, 64.4, 64.5, 64.6, 64.7, 19, 58) aufweist, welches in ein Formschlussgegenelement (57.1, 57.2, 57.3, 57.4, 57.5, 57.6, 57.7, 57.8, 18, 39) an dem Steckansatz (51) des Leitelements (50) und in ein Formschlussgegenelement (64.1, 64.2, 64.3, 64.4, 64.5, 64.6, 64.7, 19, 58) des Zinkens (10) eingreift und/oder dass der Steckansatz (51) des Leitelements (50) ein Formschlusselement (64.1, 64.2, 64.3, 64.4, 64.5, 64.6, 64.7, 19, 58) aufweist, welches in ein Formschlussgegenelement (57.1, 57.2, 57.3, 57.4, 57.5, 57.6, 57.7, 57.8, 18, 39) des Basisteils (31) der Scharspitze (30) und in ein Formschlussgegenelement (57.1, 57.2, 57.3, 57.4, 57.5, 57.6, 57.7, 57.8, 18, 39) des Zinkes (10) eingreift und/oder dass der Zinken (10) ein Formschlusselement (64.1, 64.2, 64.3, 64.4, 64.5, 64.6, 64.7, 19, 58) aufweist, welches in ein Formschlussgegenelement (57.1, 57.2, 57.3, 57.4, 57.5, 57.6, 57.7, 57.8, 18, 39) des Steckansatzes (51) des Leitelements (50) und in das Formschlussgegenelement (57.1, 57.2, 57.3, 57.4, 57.5, 57.6, 57.7, 57.8, 18, 39) des Basisteils (31) der Scharspitze (30) eingreift.

21. Werkzeugkombination nach einem der Ansprüche 13 bis 20,
**dadurch gekennzeichnet,**
**dass** die Scharspitze (30) und das Leitelement (50) quer zur Werkzeugvorschubrichtung (V) mittels eines oder mehrerer Blockierstücke (62.2) formschlüssig gegeneinander blockiert sind und dass die Scharspitze (30) und das Leitelement (50) in und entgegen der Einschubrichtung des Steckansatzes (51) in die Aufnahme (60) mittels des Formschlusselements (64.1, 64.2, 64.3, 64.4, 64.5, 64.6, 64.7, 19, 58) und des Formschlussgegenelements (57.1, 57.2, 57.3, 57.4, 57.5, 57.6, 57.7, 57.8, 18, 39) formschlüssig gegeneinander blockiert sind.

22. Werkzeugkombination nach einem der Ansprüche 13 bis 21,
**dadurch gekennzeichnet,**
**dass** der Deckabschnitt (61) eine zweite Schraubaufnahme (32) aufweist, dass ein Durchbruch der zweiten Schraubaufnahme (32) durch das Formschlusselement (64.1, 64.2, 64.3, 64.4, 64.5, 64.6, 64.7, 19, 58) geführt ist, dass der Steckansatz (51) eine dritte Schraubaufnahme (56) aufweist und dass ein Durchbruch der dritten Schraubaufnahme (56) durch das Formschlussgegenelement (57.1, 57.2, 57.3, 57.4, 57.5, 57.6, 57.7, 57.8, 18, 39) geführt ist.

23. Werkzeugkombination nach einem der Ansprüche 13 bis 22,
**dadurch gekennzeichnet,**
**dass** das Formschlusselement (64.1, 64.2, 64.3, 64.4, 64.5, 64.6, 64.7, 19, 58) als Kugelansatz ausgeführt ist und/oder dass das Formschlussgegenelement (57.1, 57.2, 57.3, 57.4, 57.5, 57.6, 57.7, 57.8, 18, 39) als Bohrung, insbesondere als Durchgangsbohrung oder als Sackloch, oder als konkav geformte Senkung oder als Senkung mit zu einer Mittellängsachse des Formschlussgegenelements (57.1, 57.2, 57.3, 57.4, 57.5, 57.6, 57.7, 57.8, 18, 39) geradlinig und geneigt verlaufenden Flächen ausgeführt ist.

24. Werkzeugkombination nach einem der Ansprüche 13 bis 23,
**dadurch gekennzeichnet,**
**dass** der Deckabschnitt (61) endseitig eine über das Leitelement (50) stehende Freifläche (38.7) ausbildet und dass eine vierte Schraubaufnahme (55) an dem Leitelement (50) unmittelbar nach der Freifläche (65), bevorzugt in einem Abstand kleiner 50mm, besonders bevorzugt in einem Abstand kleiner 30mm, angeordnet ist.

25. Werkzeugkombination nach einem der Ansprüche 13 bis 24,
**gekennzeichnet**
**durch** eine Scharspitze (30) nach einem der Ansprüche 1 bis 12.

## Claims

1. A share tip (30) for an agricultural soil cultivation machine, comprising a base part (31), which has a cutter (40.3) on a cutter carrier (37), wherein the base part (31) has a screw receptacle (33) for fastening to a carrier, in particular to a tine (10) of the agricultural soil cultivation machine,
**characterised in that**
the base part (31) has a receptacle (60) covered by means of a cover portion (61) in the tool feed direction (V) for fixing a plug-in projection (51) of a guide element (50), said plug-in projection being insertable into the receptacle (60), and that the receptacle (60) has at least one form-fit element (64.1, 64.2, 64.3,64.4,64.5, 64.6, 64.7, 19, 58) to form a form-fitting connection with at least one form-fitting counter element (57.1, 57.2, 57.3, 57.4, 57.5, 57.6, 57.7, 57.8, 18, 39) attached to the plug-in projection (51) such that a movement of the guide element (50) out of the receptacle (60) is blocked.

2. A share tip (30) according to claim 1,
**characterised in that**
the receptacle (60) is open towards a back side of the share tip (30), said back side being opposite the tool feed direction (V), that the receptacle (60) is open via a receptacle opening (63) towards a front side of the base part (31), said front side being opposite the cutter (40.3), and that the receptacle (60) on the side of the receptacle opening (63) is surrounded by lateral walls (62) proceeding from the cover portion (61).

3. A share tip (30) according to one of claims 1 to 2,
**characterised in that**
the at least one form-fit element (64.1, 64.2, 64.3, 64.4, 64.5, 64.6, 64.7, 19, 58) is attached or moulded to a surface delimiting the cover portion (61) to the receptacle (60) and/or attached or moulded to a lateral wall (62) of the receptacle (60).

4. A share tip (30) according to one of claims 1 to 3,
**characterised in that**
the at least one form-fit element (64.1, 64.2, 64.3, 64.4, 64.5, 64.6, 64.7, 19, 58) is formed by at least one projection projecting from the cover portion (61) or a lateral wall (62) into the receptacle (60) and/or by at least one recess introduced in the cover portion (61) or a lateral wall (60).

5. A share tip (30) according to one of claims 1 to 4,
**characterised in that**
the at least one form-fit element (64.1, 64.2, 64.3, 64.4, 64.5, 64.6, 64.7, 19, 58) is formed by at least one region of the receptacle (60), said region tapering in the direction of the receptacle opening (63).

6. A share tip (30) according to one of claims 1 to 5,
**characterised in that**
the at least one form-fit element (64.1, 64.2, 64.3, 64.4, 64.5, 64.6, 64.7, 19, 58) is configured as a centring projection or a centring receptacle and/or that the at least one form-fit element (64.1, 64.2, 64.3, 64.4, 64.5, 64.6, 64.7, 19, 58) is configured as a ball projection or as a ball receptacle.

7. A share tip (30) according to one of claims 1 to 6,
**characterised in that**
the cover portion (61) has a second screw receptacle (32) or that the cover portion (61) has a second screw receptacle (32) and that the second screw receptacle (32) is guided through the at least one form-fit element (64.1, 64.2, 64.3, 64.4, 64.5, 64.6, 64.7, 19, 58).

8. A share tip (30) according to claim 7,
**characterised in that**
the second screw receptacle (32) is configured in the form of a blind hole with an end-side passage for feeding through a fastening screw (16).

9. A share tip (30) according to claim 7 or 8,
**characterised in that**
the passage of the second screw receptacle (32) is configured as a screw lock (66) for fixing the inserted fastening screw (16) against rotation, in particular that the passage is configured in a shape that is different to a round cross-section, in particular in a rectangular or substantially rectangular shape.

10. A share tip (30) according to one of claims 1 to 9,
**characterised in that**
the receptacle (60) on the side is delimited by two block pieces (62.2) as lateral walls (62) arranged spaced with respect to each other and transversally with respect to the tool feed direction (V) and/or that the two blocking pieces (62.2) pass towards the receptacle opening (63) into two insertion bevels (62.1) arranged spaced with respect to one another.

11. A share tip (30) according to claim 10,
**characterised in that**
the form-fit element (64.1, 64.2, 64.3, 64.4, 64.5, 64.6, 64.7, 19, 58) at least in some regions is arranged between the blocking pieces (62.2) and that the blocking pieces (62.2) are spaced in a range between 40 mm and 50 mm, preferably in a range between 44 mm and 48 mm, particularly preferably 46 mm, and/or that the insertion bevels (62.1), starting from the blocking pieces (62.2) are arranged at a mutual opening angle (62.4) in a range between 50° and 70°, preferably in a range between 58° and 62°, particularly preferably of 60°.

12. A share tip (30) according to claims 1 to 11,
**characterised in that**
a protrusion (34.1) mounted in front in the tool feed direction (V) is associated with the screw receptacle (33) and/or the second screw receptacle (32), which protrusion protrudes over a diverting surface (34), and/or that the screw receptacles (33) and the second screw receptacle (32) each have a depression into which a screw head (16.1, 17.1) of an inserted fastening screw (16, 17) can be inserted in a recessed manner with respect to the diverting surface (34).

13. A tool combination comprising a share tip (30) for an agricultural soil cultivation machine, wherein the share tip (30) has a base part (31), which has a cutter (40.3) on a cutter carrier (37), and a guide element (50) connected to the share tip (30), wherein the share tip (30) has a screw receptacle (33) for fastening to a tine (10) of the agricultural soil cultivation machine, **characterised in that** the base part (31) has a receptacle (60), which is covered in the tool feed direction (V) by means of a cover portion (61), that the guide element (50) has a plug-in projection (51), which is held in the receptacle (60), and that in the region of the receptacle (39) between the share tip (30) and the guide element (50) a form-fitting connection is effective, which blocks a movement of the guide element (50) from the receptacle (60).

14. A tool combination according to claim 13,
**characterised in that**
the receptacle (60) is open towards a back side of the share tip (30), said back side being opposite the tool feed direction (V), that the receptacle (60) is open via a receptacle opening (63) towards a front side of the base part (31), said front side being opposite the cutter (40.3), and that the receptacle (60) on the side of the receptacle opening (63) is surrounded by lateral walls (62) proceeding from the cover portion (61), that the plug-in projection (51) of the guide element (50) is inserted through the receptacle opening (63) into the receptacle (60), that at least one form-fit element (64.1, 64.2, 64.3, 64.4, 64.5, 64.6, 64.7, 19, 58) is attached or moulded to a surface delimiting the cover portion (61) towards the receptacle (60) and/or attached or moulded to a lateral wall (62) of the receptacle (60), and that the plug-in projection (51) has at least one form-fitting counter element (57.1, 57.2, 57.3, 57.4, 57.5, 57.6, 57.7, 57.8, 18, 39) corresponding to the form-fit element (64.1, 64.2, 64.3, 64.4, 64.5, 64.6, 64.7, 19, 58).

15. A tool combination according to claim 13 or 14,
**characterised in that**
the at least one form-fit element (64.1, 64.2, 64.3, 64.4, 64.5, 64.6, 64.7, 19, 58) is formed by at least one projection projecting from the cover portion (61) or a lateral wall (62) into the receptacle (60) and/or by at least one recess introduced in the cover portion (61) or a lateral wall (62), and that the at least one form-fitting counter element engages into the recess or that the projection engages in the at least one form-fitting counter element (57.1, 57.2, 57.3, 57.4, 57.5, 57.6, 57.7, 57.8, 18, 39).

16. A tool combination according to one of claims 13 to 15,
**characterised in that**
the at least one form-fit element (64.1, 64.2, 64.3, 64.4, 64.5, 64.6, 64.7, 19, 58) is formed by at least one region of the receptacle (51), said region tapering in the direction of the receptacle opening (63), and that the at least one form-fitting counter element (57.1, 57.2, 57.3, 57.4, 57.5, 57.6, 57.7, 57.8, 18, 39) is formed by at least one region of the plug-in projection (51), said region tapering in the direction of the receptacle opening (63).

17. A tool combination according to one of claims 13 to 16,
**characterised in that**
the at least one form-fit element (64.1, 64.2, 64.3, 64.4, 64.5, 64.6, 64.7, 19, 58) is configured as a centring projection, and that at least one form-fitting counter element (57.1, 57.2, 57.3, 57.4, 57.5, 57.6, 57.7, 57.8, 18, 39) is configured as a centring receptacle, or that the at least one form-fit element (64.1, 64.2, 64.3, 64.4, 64.5, 64.6, 64.7, 19, 58) is configured as a centring receptacle, and that at least one form-fitting counter element (57.1,57.2, 57.3, 57.4, 57.5, 57.6, 57.7, 57.8, 18, 39) is configured as a centring projection, wherein the centring projection engages in the centring receptacle, and/or that the centring projection is configured as a ball projection or the centring receptacle is configured as a ball receptacle.

18. A tool combination according to one of claims 13 to 17,
**characterised in that**
the at least one form-fitting counter element (57.1, 57.2, 57.3, 57.4, 57.5, 57.6, 57.7, 57.8, 18, 39) is configured as a bead moulded into the plug-in projection (51).

19. A tool combination according to one of claims 13 to 18,
**characterised in that**
the guide element (50) is connected to the tine (10), and that in the boundary surface between the guide element (50) and the tine (10) an additional form-fitting connection is provided, and/or that between the guide element (50) and the base part (31) a further form-fitting connection is provided.

20. A tool combination according to one of claims 13 to 19,
**characterised in that**
the base part (31) of the share tip (30) in the region of the receptacle (60) has a form-fit element (64.1, 64.2, 64.3, 64.4, 64.5, 64.6, 64.7, 19, 58), which engages in a form-fitting counter element (57.1, 57.2, 57.3, 57.4, 57.5, 57.6, 57.7, 57.8, 18, 39) on the plug-in projection (51) of the guide element (50) and in a form-fitting counter element (64.1, 64.2, 64.3, 64.4, 64.5, 64.6, 64.7, 19, 58) of the tine (10), and/or that the plug-in projection (51) of the guide element (50) has a form-fit element (64.1, 64.2, 64.3, 64.4, 64.5, 64.6, 64.7, 19, 58), which engages in a form-fitting counter element (57.1, 57.2, 57.3, 57.4, 57.5, 57.6, 57.7, 57.8, 18, 39) of the base part (31) of the share tip (30) and in a form-fitting counter element (57.1, 57.2, 57.3, 57.4, 57.5, 57.6, 57.7, 57.8, 18, 39) of the tine (10) and/or that the tine (10) has a form-fit element (64.1, 64.2, 64.3, 64.4, 64.5, 64.6, 64.7, 19, 58), which engages in a form-fitting counter element (57.1, 57.2, 57.3, 57.4, 57.5, 57.6, 57.7, 57.8, 18, 39) of the plug-in projection (51) of the guide element (50) and in the form-fitting counter element (57.1, 57.2, 57.3, 57.4, 57.5, 57.6, 57.7, 57.8, 18, 39) of the base part (31) of the share tip (30).

21. A tool combination according to one of claims 13 to 20,
**characterised in that**
the share tip (30) and the guide element (50) transversally with respect to the tool feed direction (V) are blocked against one another in a form-fitting manner by means of one or more blocking pieces (62.2), and that the share tip (30) and the guide element (50) are blocked against one another in a form-fitting manner in and counter to the insertion direction of the plug-in projection (51) into the receptacle (60) by means of the form-fit element (64.1, 64.2, 64.3, 64.4, 64.5, 64.6, 64.7, 19, 58) and the form-fitting counter element (57.1, 57.2, 57.3, 57.4, 57.5, 57.6, 57.7, 57.8, 18, 39).

22. A tool combination according to one of claims 13 to 21,
**characterised in that**
the cover portion (61) has a second screw receptacle (32), that a passage of the second screw receptacle (32) is guided through the form-fit element (64.1, 64.2, 64.3, 64.4, 64.5, 64.6, 64.7, 19, 58), that the plug-in projection (51) has a third screw receptacle (56), and that a passage of the third screw receptacle (56) is guided through the form-fitting counter element (57.1, 57.2, 57.3, 57.4, 57.5, 57.6, 57.7, 57.8, 18, 39).

23. A tool combination according to one of claims 13 to 22,
**characterised in that**
the form-fit element (64.1, 64.2, 64.3, 64.4, 64.5, 64.6, 64.7, 19, 58) is configured as a ball projection, and/or that the form-fitting counter element (57.1, 57.2, 57.3, 57.4, 57.5, 57.6, 57.7, 57.8, 18, 39) is configured as a hole, in particular as a through-hole or as a blind hole, or as a concavely shaped depression or as a depression comprising surfaces which extend towards the middle longitudinal axis of the form-fitting counter element (57.1, 57.2, 57.3, 57.4, 57.5, 57.6, 57.7, 57.8, 18, 39) in a linear and inclined manner.

24. A tool combination according to one of claims 13 to 23,
**characterised in that**
the cover portion (61) on the end side forms a free surface (38.7) which stands over the guide element (50), and that a fourth screw receptacle (55) is arranged on the guide element (50) directly behind the free surface (65), preferably at a distance less than 50 mm, particularly preferably at a distance less than 30 mm.

25. A tool combination according to one of claims 13 to 24,
**characterised**
**by** a share tip (30) according to one of claims 1 to 12.

## Revendications

1. Pointe de soc (30) pour une machine agricole de préparation du sol, comprenant une partie de base (31), qui présente une lame (40.3) sur un porte-lame (37), la partie de base (31) présente un logement de réception de vis (33) pour fixation à un support, en particulier un une dent (10) de la machine agricole de préparation du sol,
**caractérisée en ce que**
la partie de base (31) présente un logement (60) recouvert par un segment de recouvrement (61) dans la direction d'avancement de l'outil (V) pour fixation d'une saillie emboîtable (51) dans le logement (60) d'un élément de guidage (50) et **en ce que** le logement (60) présente au moins un élément à coopération de forme (64.1, 64.2, 64.3, 64.4, 64.5, 64.6, 64.7, 19, 58) pour la formation d'un raccordement par complémentarité de forme avec au moins un élément complémentaire à coopération de forme (57.1, 57.2, 57.3, 57.4, 57.5, 57.6, 57.7, 57.8, 18, 39) placé sur la saillie emboîtable (51), de manière à empêcher un mouvement de l'élément de guidage (50) hors du logement (60).

2. Pointe de soc(30) selon la revendication 1,
**caractérisée en ce**
**que** le logement (60) est ouvert sur un côté arrière de la pointe de soc (30) opposé à la direction d'avancement de l'outil (V), en ce que le logement (60) est ouvert sur un côté avant de la partie de base (31) opposé à la lame (40.3) par le biais d'une ouverture de logement (63) et en ce que le logement (60) est bordé sur le côté de l'ouverture de logement (63) par les parois latérales (62) partant du segment de recouvrement (61).

3. Pointe de soc (30) selon une des revendications 1 à 2,
**caractérisée en ce**
**que** le au moins un élément à coopération de forme (64.1, 64.2, 64.3, 64.4, 64.5, 64.6, 64.7, 19, 58) est disposé ou ménagé sur une surface limitant le segment de recouvrement (61) jusqu'au logement (60) et/ou sur une paroi latérale (62) du logement (60).

4. Pointe de soc (30) selon une des revendications 1 à 3,
**caractérisée en ce**
**que** le au moins un élément à coopération de forme (64.1, 64.2, 64.3, 64.4, 64.5, 64.6, 64.7, 19, 58) est formé par au moins un épaulement en saillie depuis le segment de recouvrement (61) ou une paroi latérale (62) dans le logement (60) et/ou par au moins un évidement réalisé dans le segment de recouvrement (61) ou une paroi latérale (60).

5. Pointe de soc (30) selon une des revendications 1 à 4,
**caractérisée en ce**
**que** le au moins un élément à coopération de forme (64.1, 64.2, 64.3, 64.4, 64.5, 64.6, 64.7, 19, 58) est formé par au moins une zone du logement (60) se rétrécissant en direction de l'ouverture de logement (63).

6. Pointe de soc (30) selon une des revendications 1 à 5,
**caractérisée en ce**
**que** le au moins un élément à coopération de forme (64.1, 64.2, 64.3, 64.4, 64.5, 64.6, 64.7, 19, 58) est réalisé comme une saillie de centrage ou un logement de centrage et/ou en ce que le au moins un élément à coopération de forme (64.1, 64.2, 64.3, 64.4, 64.5, 64.6, 64.7, 19, 58) est réalisé comme une saillie sphérique ou un logement sphérique.

7. Pointe de soc (30) selon une des revendications 1 à 6,
**caractérisée en ce**
**que** le segment de recouvrement (61) présente un deuxième logement de vis (32) ou en ce que le segment de recouvrement (61) présente un deuxième logement de vis (32) et en ce que le deuxième logement de vis (32) est réalisé par le au moins un élément à coopération de forme (64.1, 64.2, 64.3, 64.4, 64.5, 64.6, 64.7, 19, 58).

8. Pointe de soc(30) selon la revendication 7,
**caractérisée en ce**
**que** le deuxième logement de vis (32) est réalisé sous forme de trou borgne avec une percée d'extrémité pour la mise en place d'une vis de fixation (16).

9. Pointe de soc (30) selon la revendication 7 ou 8,
**caractérisée en ce**
**que** la percée du deuxième logement de vis (32) prend la forme d'un blocage de vis (66) pour la fixation sans possibilité de rotation de la vis de fixation introduite (16), notamment en ce que la percée est réalisée en une forme différente d'une section transversale ronde, notamment en une forme rectangulaire ou essentiellement rectangulaire.

10. Pointe de soc (30) selon une des revendications 1 à 9,
**caractérisée en ce**
**que** le logement (60) est limité sur les côtés par deux organes de blocage (62.2) disposés transversalement par rapport à la direction d'avancement de l'outil (V) espacés l'un de l'autre en guise de parois latérales (62) et/ou en ce que les deux organes de blocage (62.2) fusionnent vers l'ouverture de logement (63) dans deux chanfreins d'introduction (62.1) disposés à l'écart l'un de l'autre.

11. Pointe de soc(30) selon la revendication 10,
**caractérisée en ce**
**que** l'élément à coopération de forme (64.1, 64.2, 64.3, 64.4, 64.5, 64.6, 64.7, 19, 58) est disposé au moins par endroits entre les organes de blocage (62.2) et en ce que les organes de blocage (62.2) sont espacés d'une plage comprise entre 40 mm et 50 mm, de préférence d'une plage comprise entre 44 mm et 48 mm, préférablement de 46 mm et/ou en ce que les chanfreins d'introduction (62.1) sont disposés, en partant des organes de blocage (62.2), selon un angle d'ouverture mutuel (62.4) dans une plage comprise entre 50 ° et 70 °, de préférence dans une plage comprise entre 58 ° et 62 °, préférablement de 60 °.

12. Pointe de soc (30) selon une des revendications 1 à 11,
**caractérisée en ce**
**qu'**une saillie (34.1) est respectivement attribuée au logement de vis (33) et/ou au deuxième logement de vis (32) en amont dans la direction d'avancement de l'outil (V), laquelle dépasse au-dessus d'une surface de travail (34) et/ou en ce que les logements de vis (33) et le deuxième logement de vis (32) présentent respectivement un renfoncement, dans lequel une tête de vis (16.1, 17.1) d'une vis de fixation introduite (16, 17) peut être respectivement insérée en retrait par rapport à la surface de travail (34).

13. Combinaison d'outil ayant une pointe de soc (30) pour une machine agricole de préparation du sol, la pointe de soc (30) présentant une partie de base (31), qui présente une lame (40.3) sur un porte-lame (37) et un élément de guidage (50) raccordé à la pointe de soc (30), la pointe de soc (30) présentant un logement de vis (33) pour la fixation sur une dent (10) de la machine agricole de préparation du sol, **caractérisée en ce**
**que** la partie de base (31) présente un logement (60), qui est recouvert par un segment de recouvrement (61) dans la direction d'avancement de l'outil (V), en ce que l'élément de guidage (50) présente une saillie emboîtable (51), qui est retenue dans le logement (60) et en ce que, dans la zone du logement (39) entre la pointe de soc (30) et l'élément de guidage (50) un raccordement par complémentarité de forme a pour effet de bloquer tout mouvement de l'élément de guidage (50) hors du logement (60).

14. Combinaison d'outil selon la revendication 13,
**caractérisée en ce**
**que** le logement (60) est ouvert sur un côté arrière de la pointe de soc (30) opposé à la direction d'avancement de l'outil (V), en ce que le logement (60) est ouvert sur un côté avant de la partie de base (31) opposé à la lame (40.3) par le biais d'une ouverture de logement (63), en ce que le logement (60) est bordé sur le côté de l'ouverture de logement (63) par les parois latérales (62) partant du segment de recouvrement (61), en ce que la saillie emboîtable (51) de l'élément de guidage (50) est introduite dans le logement (60) par le biais de l'ouverture de logement (63), en ce que au moins un élément à coopération de forme (64.1, 64.2, 64.3, 64.4, 64.5, 64.6, 64.7, 19, 58) est disposé ou ménagé sur une surface limitant le segment de recouvrement (61) jusqu'au logement (60) et/ou sur une paroi latérale (62) du logement (60) et en ce que la saillie emboîtable (51) présente au moins un élément complémentaire à coopération de forme (57.1, 57.2, 57.3, 57.4, 57.5, 57.6, 57.7, 57.8, 18, 39) correspondant à l'élément à coopération de forme (64.1, 64.2, 64.3, 64.4, 64.5, 64.6, 64.7, 19, 58).

15. Combinaison d'outil selon la revendication 13 ou 14,
**caractérisée en ce**
**que** le au moins un élément à coopération de forme (64.1, 64.2, 64.3, 64.4, 64.5, 64.6, 64.7, 19, 58) est formé par au moins un épaulement en saillie depuis le segment de recouvrement (61) ou une paroi latérale (62) dans le logement (60) et/ou par au moins un évidement réalisé dans le segment de recouvrement (61) ou une paroi latérale (62) et en ce que le au moins un élément complémentaire à coopération de forme s'engrène dans l'évidement ou en ce que la saillie s'engrène dans le au moins un élément complémentaire à coopération de forme (57.1, 57.2, 57.3, 57.4, 57.5, 57.6, 57.7, 57.8, 18, 39).

16. Combinaison d'outil selon l'une des revendications 13 à 15,
**caractérisée en ce**
**que** le au moins un élément à coopération de forme (64.1, 64.2, 64.3, 64.4, 64.5, 64.6, 64.7, 19, 58) est formé par au moins une zone du logement (60) se rétrécissant en direction de l'ouverture de logement (63) et en ce que le au moins un élément complémentaire à coopération de forme (57.1, 57.2, 57.3, 57.4, 57.5, 57.6, 57.7, 57.8, 18, 39) est formé par au moins une zone de la saillie emboîtable (51) se rétrécissant en direction de l'ouverture de logement (63).

17. Combinaison d'outil selon l'une des revendications 13 à 16,
**caractérisée en ce**
**que** le au moins un élément à coopération de forme (64.1, 64.2, 64.3, 64.4, 64.5, 64.6, 64.7, 19, 58) est réalisé comme une saillie de centrage et en ce que le au moins un élément complémentaire à coopération de forme (57.1, 57.2, 57.3, 57.4, 57.5, 57.6, 57.7, 57.8, 18, 39) est réalisé comme un logement de centrage ou en ce que le au moins un élément à coopération de forme (64.1, 64.2, 64.3, 64.4, 64.5, 64.6, 64.7, 19, 58) est réalisé comme un logement de centrage et en ce que le au moins un élément complémentaire à coopération de forme (57.1, 57.2, 57.3, 57.4, 57.5, 57.6, 57.7, 57.8, 18, 39) est réalisé comme une saillie de centrage, la saillie de centrage s'engrenant respectivement dans le logement de centrage et/ou en ce que la saillie de centrage est réalisée comme une saillie sphérique ou le logement de centrage est réalisé comme un logement sphérique.

18. Combinaison d'outil selon l'une des revendications 13 à 17,
**caractérisée en ce**
**que** le au moins un élément complémentaire à coopération de forme (57.1, 57.2, 57.3, 57.4, 57.5, 57.6, 57.7, 57.8, 18, 39) est formé comme une nervure ménagée dans la saillie emboîtable (51).

19. Combinaison d'outil selon l'une des revendications 13 à 18,
**caractérisée en ce**
**que** l'élément de guidage (50) est raccordé à la dent (10) et en ce que, dans l'interface entre l'élément de guidage (50) et la dent (10), se trouve un raccordement par complémentarité de forme supplémentaire et/ou en ce que, entre l'élément de guidage (50) et la partie de base (31) se trouve un autre raccordement par complémentarité de forme.

20. Combinaison d'outil selon l'une des revendications 13 à 19,
**caractérisée en ce**
**que** la partie de base (31) de la pointe de soc (30) présente, dans la zone du logement (60), un élément à coopération de forme (64.1, 64.2, 64.3, 64.4, 64.5, 64.6, 64.7, 19, 58), qui s'engrène dans un élément complémentaire à coopération de forme (57.1, 57.2, 57.3, 57.4, 57.5, 57.6, 57.7, 57.8, 18, 39) sur la saillie emboîtable (51) de l'élément de guidage (50) et dans un élément complémentaire à coopération de forme (64.1, 64.2, 64.3, 64.4, 64.5, 64.6, 64.7, 19, 58) de la dent (10) et/ou en ce que la saillie emboîtable (51) de l'élément de guidage (50) présente un élément à coopération de forme (64.1, 64.2, 64.3, 64.4, 64.5, 64.6, 64.7, 19, 58), qui s'engrène dans un élément complémentaire à coopération de forme (57.1, 57.2, 57.3, 57.4, 57.5, 57.6, 57.7, 57.8, 18, 39) de la partie de base (31) de la pointe de soc (30) et dans un élément complémentaire à coopération de forme (57.1, 57.2, 57.3, 57.4, 57.5, 57.6, 57.7, 57.8, 18, 39) de la dent (10) et/ou en ce que la dent (10) présente un élément à coopération de forme (64.1, 64.2, 64.3, 64.4, 64.5, 64.6, 64.7, 19, 58), qui s'engrène dans un élément complémentaire à coopération de forme (57.1, 57.2, 57.3, 57.4, 57.5, 57.6, 57.7, 57.8, 18, 39) de la saillie emboîtable (51) de l'élément de guidage (50) et dans l'élément complémentaire à coopération de forme (57.1, 57.2, 57.3, 57.4, 57.5, 57.6, 57.7, 57.8, 18, 39) de la partie de base (31) de la pointe de soc (30).

21. Combinaison d'outil selon l'une des revendications 13 à 20,
**caractérisée en ce**
**que** la pointe de soc (30) et l'élément de guidage (50) sont bloqués l'un contre l'autre, par complémentarité de forme, transversalement à la direction d'avancement de l'outil (V) au moyen d'un ou de plusieurs organes de blocage (62.2) et en ce que la pointe de soc (30) et l'élément de guidage (50) sont bloqués l'un contre l'autre par complémentarité de forme dans et contre la direction d'introduction de la saillie emboîtable (51) dans le logement (60) au moyen de l'élément à coopération de forme (64.1, 64.2, 64.3, 64.4, 64.5, 64.6, 64.7, 19, 58) et de l'élément complémentaire à coopération de forme (57.1, 57.2, 57.3, 57.4, 57.5, 57.6, 57.7, 57.8, 18, 39).

22. Combinaison d'outil selon l'une des revendications 13 à 21,
**caractérisée en ce**
**que** le segment de recouvrement (61) présente un deuxième logement de vis (32), en ce qu'une percée du deuxième logement de vis (32) est réalisée à travers l'élément à coopération de forme (64.1, 64.2, 64.3, 64.4, 64.5, 64.6, 64.7, 19, 58), en ce que la saillie emboîtable (51) présente un troisième logement de vis (56) et en ce qu'une percée du troisième logement de vis (56) est réalisée à travers l'élément complémentaire à coopération de forme (57.1, 57.2, 57.3, 57.4, 57.5, 57.6, 57.7, 57.8, 18, 39).

23. Combinaison d'outil selon l'une des revendications 13 à 22,
**caractérisée en ce**
**que** l'élément à coopération de forme (64.1, 64.2, 64.3, 64.4, 64.5, 64.6, 64.7, 19, 58) est réalisé comme une saillie sphérique et/ou en ce que l'élément complémentaire à coopération de forme (57.1, 57.2, 57.3, 57.4, 57.5, 57.6, 57.7, 57.8, 18, 39) est réalisé comme un alésage, notamment comme un alésage traversant ou comme trou borgne ou comme un enfoncement de forme concave ou comme un enfoncement avec des surfaces s'étendant de façon linéaire et inclinée par rapport à un axe longitudinal médian de l'élément complémentaire à coopération de forme (57.1, 57.2, 57.3, 57.4, 57.5, 57.6, 57.7, 57.8, 18, 39).

24. Combinaison d'outil selon l'une des revendications 13 à 23,
**caractérisée en ce**
**que** le segment de recouvrement (61) forme vers l'extrémité une surface libre (38.7) reposant sur l'élément de guidage (50) et en ce qu'un quatrième logement de vis (55) est disposé sur l'élément de guidage (50) directement à côté de la surface libre (65), de préférence à une distance inférieure à 50 mm, préférablement à une distance inférieure à 30 mm .

25. Combinaison d'outil selon l'une des revendications 13 à 24,
**caractérisée**
**par** une pointe de soc (30) selon une des revendications 1 à 12.
